# EUROPÄISCHE PATENTSCHRIFT

(11) **EP 3 707 810 B1**
(45) Veröffentlichungstag und Bekanntmachung des Hinweises auf die Patenterteilung: **12.01.2022**
(21) Anmeldenummer: 18826320.6
(22) Anmeldetag: 19.12.2018
(51) Int. Cl.: B65G 37/02, B65G 54/02, H02K 11/33, H02K 41/03

(54) **STATORMODUL**
STATOR MODULE
MODULE DE STATOR

(30) Priorität: 27.12.2017 DE 102017131304
(43) Veröffentlichungstag der Anmeldung: 16.09.2020
(73) Patentinhaber: Beckhoff Automation GmbH, 33415 Verl (DE)
(72) Erfinder: BENTFELD, Lukas, 33098 Paderborn (DE); BRINKMANN, Rolf, 32107 Bad Salzuflen (DE); PRUESSMEIER, Uwe, 32657 Lemgo (DE)
(74) Vertreter: Patentanwaltskanzlei WILHELM & BECK
(86) Internationale Anmeldenummer: PCT/EP2018/085780
(87) Internationale Veröffentlichungsnummer: WO 2019/129562

(56) Entgegenhaltungen:
- WO-A1-2013/059934
- DE-A1-102016 208 155
- US-A1- 2012 328 836
- US-A1- 2015 097 498

## Beschreibung

Die Erfindung betrifft ein ein Planarantriebssystem mit einem Statormodul und einem Läufer.

Diese Patentanmeldung beansprucht die Priorität der deutschen Patentanmeldung DE 10 2017 131 304.4 deren Offenbarungsgehalt hiermit durch Rückbezug aufgenommen wird.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass stromdurchflossene Leiter mit Antriebsmagneten einer Magnetanordnung magnetisch wechselwirken. Die Erfindung betrifft insbesondere Ausgestaltungen von Planarantriebssystemen, bei denen die Antriebsmagneten eines elektrischen Planarmotors an dem Läufer und die stromdurchflossenen Leiter des Planarmotors in einem ortsfest angeordneten planaren Stator angeordnet sind.

Bei einem derartigen Antriebssystem umfasst der Läufer mindestens eine erste Magneteinheit für den Antrieb des Läufers in eine erste Richtung und eine zweite Magneteinheit für den Antrieb des Läufers in eine von der ersten Richtung linear unabhängige, beispielsweise in eine zu der ersten Richtung orthogonale, zweite Richtung. Der planare Stator umfasst mindestens eine Gruppe erster bestrombarer Leiter, welche mit den Magneten der ersten Magneteinheit magnetisch wechselwirken, um den Läufer in die erste Richtung anzutreiben, sowie eine Gruppe zweiter bestrombarer Leiter, welche mit den Magneten der zweiten Magneteinheit magnetisch wechselwirken, um den Läufer in die zweite Richtung anzutreiben. Die ersten und zweiten Gruppen von Leitern sind in der Regel unabhängig voneinander bestrombar, um voneinander unabhängige Bewegungen des Läufers in die erste und zweite Richtung zu ermöglichen. Sind die Leiter der ersten und zweiten Gruppe selbst zumindest in Teilen unabhängig voneinander bestrombar, können auf einem Stator zeitgleich mehrere Läufer unabhängig voneinander bewegt werden.

Die Druckschriften WO 2013/059934 A1, WO 2015/017933 A1, WO 2015/179962 A1, WO 2015/184553 A1, WO 2015/188281 A1, WO 2017/004716 A1 beschreiben jeweils Planarantriebssysteme (*displacement devices*), welche einen elektromagnetischen Planarmotor mit einem permanenterregten Läufer und einem mehrere bestrombare Leiter umfassenden Stator umfassen.

Aus der WO 2013/059934 A1 ist ein Planarantriebssystem mit den Merkmalen des Oberbegriffs des Anspruch 1 bekannt. Weiterer Stand der Technik ist in der US 2015/ 0097498 A1, US 2012/328836 A1, und der DE 10 2026 208155 A1 beschrieben.

Aufgabe der vorliegenden Erfindung ist es, ein verbessertes Planarantriebssystem anzugeben.

Diese Aufgabe wird durch ein Planarantriebssystem gemäß dem unabhängigen Anspruch 1 gelöst. Weiterbildungen sind jeweils in den abhängigen Ansprüchen angeben.

Ein Planarantriebssystem umfasst ein Statormodul und einen Läufer. Der Läufer weist eine Magnetanordnung auf, wobei die Magnetanordnung zumindest eine erste Magneteinheit und zumindest eine zweite Magneteinheit aufweist. Die erste Magneteinheit weist in einer ersten Läuferrichtung nebeneinander angeordnete und entlang einer zu der ersten Läuferrichtung senkrecht orientierten zweiten Läuferrichtung ausgedehnte längliche Antriebsmagnete auf. Die zweite Magneteinheit weist in der zweiten Läuferrichtung nebeneinander angeordnete und entlang der ersten Läuferrichtung ausgedehnte längliche Antriebsmagnete auf. Das Statormodul weist eine Statoreinheit mit mindestens einem Statorsektor auf, der in einer ersten Statorlage erste Statorsegmente zur Wechselwirkung mit den Antriebsmagneten der ersten Magneteinheit und in einer unter der ersten Statorlage angeordneten zweiten Statorlage zweite Statorsegmente zur Wechselwirkung mit den Antriebsmagneten der zweiten Magneteinheit umfasst. Die ersten Statorsegmente weisen entlang einer ersten Richtung nebeneinander angeordnete und entlang einer zu der ersten Richtung senkrecht orientierten zweiten Richtung ausgedehnte längliche Leiterstreifen auf. Die zweiten Statorsegmente weisen entlang der zweiten Richtung nebeneinander angeordnete und entlang der ersten Richtung ausgedehnte längliche Leiterstreifen auf. Die Leiterstreifen der einzelnen Statorsegmente sind jeweils unabhängig von den Leiterstreifen der übrigen Statorsegmente bestrombar. Die ersten Statorsegmente des Statorsektors erstrecken sich in der zweiten Richtung über alle nebeneinander angeordneten zweiten Statorsegmente des Statorsektors und die zweiten Statorsegmente des Statorsektors erstrecken sich in der ersten Richtung über alle nebeneinander angeordneten ersten Statorsegmente des Statorsektors. Eine Sektorbreite des Statorsektors in der ersten Richtung ist kleiner als eine Ausdehnung der Magnetanordnung in der ersten Läuferrichtung und eine Sektorlänge des Statorsektors in der zweiten Richtung ist kleiner als eine Ausdehnung der Magnetanordnung in der zweiten Läuferrichtung.

Bei einem derartigen Planarantriebssystem kann die Fläche des Statormoduls, die für den Antrieb des Läufers zu bestromen ist, besonders gut an die Größe der Magnetanordnung angepasst werden. Insbesondere kann eine Fläche des Stators, die nicht von der Magnetanordnung überdeckt wird, bei dem Antrieb des Läufers aber dennoch bestromt wird, klein gehalten werde. Beispielsweise kann die von der Magnetanordnung nicht überdeckte bestromte Fläche in der ersten und der zweiten Richtung auf die Ausdehnung der Magnetanordnung in der ersten bzw. der zweiten Läuferrichtung begrenzt werden.

Bei dem Planarantriebssystem besteht der Statorsektor in der ersten Statorlage aus drei unabhängig voneinander bestrombaren ersten Statorsegmenten und in der zweiten Statorlage aus drei unabhängig voneinander bestrombaren zweiten Statorsegmenten. Bei einem derartigen Planarantriebssystem kann, insbesondere beim Antrieb eines Läufers mit einer Magnetanordnung, die jeweils eine Breite von im Wesentlichen drei Magnetisierungsperioden in beide Läuferrichtungen aufweist, sowohl die Anzahl unabhängig zu bestromender Statorsegmente, als auch die instantan zu bestromende Statorfläche, klein gehalten werden.

Bei einer Weiterbildung des Planarantriebssystems entspricht eine Segmentbreite der ersten Statorsegmente in der ersten Richtung einer Magnetisierungsperiode der ersten Magneteinheit und eine Segmentbreite der zweiten Statorsegmente in der zweiten Richtung entspricht einer Magnetisierungsperiode der zweiten Magneteinheit. Dadurch kann die Bestromung der entlang der ersten Richtung nebeneinander angeordneten Leiterstreifen der ersten Statorsegmente in Vielfachen der Magnetisierungsperiode der ersten Magneteinheit und die Bestromung der entlang der zweiten Richtung nebeneinander angeordneten Leiterstreifen der zweiten Statorsegmente in Vielfachen der Magnetisierungsperiode der zweiten Magneteinheit variiert werden. Damit kann die Anzahl der Leiterstreifen, die bei einer Bewegung des Läufers gleichzeitig bestromt werden müssen, klein gehalten werden. Dies verringert die für das Antreiben des Läufers erforderliche Energie und die beim Antreiben des Läufers anfallende Verlustwärme. Außerdem können sich zwei unabhängig voneinander über der Statoreinheit angetriebene besonders nahe annähern, ohne dass der eine Läufer mit den den anderen Läufer antreibenden Leiterstreifen wechselwirkt.

Bei einer Weiterbildung des Planarantriebssystems entspricht die Segmentbreite der ersten Statorsegmente in der zweiten Richtung dem Dreifachen der Magnetisierungsperiode der ersten Magneteinheit und die Segmentbreite der zweiten Statorsegmente in der ersten Richtung entspricht dem Dreifachen der Magnetisierungsperiode der zweiten Magneteinheit. Damit kann die Anzahl der Statorsegmente, die bei einer Bewegung des Läufers gleichzeitig bestromt werden müssen, klein gehalten werden.

Bei einer Weiterbildung des Planarantriebssystems entspricht eine Leiterperiode zwischen den Leiterstreifen der ersten Statorsegmente einem Sechstel einer Magnetisierungsperiode der ersten Magneteinheit und eine Leiterperiode der Leiterstreifen der zweiten Statorsegmente entspricht einem Sechstel einer Magnetisierungsperiode der zweiten Magneteinheit.

Bei derartigen Statorsegmenten können die Leiterstreifen eines Statorsegments jeweils zu einem Dreiphasensystem mit einem gemeinsamen Sternpunkt zusammengeschaltet werden und von einer gemeinsamen dreiphasigen Stromerzeugungseinheit mit Strom versorgt werden. Das Statorsegment kann dadurch mit einer geringen Zahl von Stromerzeugungseinheiten betrieben werden.

Bei einer Weiterbildung des Planarantriebssystems entsprechen eine Ausdehnung der ersten Magneteinheit in der ersten Läuferrichtung einer Magnetisierungsperiode der ersten Magneteinheit und eine Ausdehnung der zweiten Magneteinheit in der zweiten Läuferrichtung einer Magnetisierungsperiode der zweiten Magneteinheit. Dadurch kann zum einen eine verhältnismäßig große Kraft auf den Läufer ausgeübt werden, zum anderen kann die Magnetanordnung verhältnismäßig kompakte Abmessungen aufweisen.

Bei einer Weiterbildung des Planarantriebssystems ist der Statorsektor quadratisch ausgebildet, so dass die Sektorbreite des Statorsektors in der ersten Richtung der Sektorlänge des Statorsektors in der zweiten Richtung entspricht. Dies ermöglicht eine einfache Aneinanderreihung mehrerer Statormodule sowohl in der ersten, als auch in der zweiten Richtung.

Bei einer Weiterbildung des Planarantriebssystems schließt eine Außenkante des Statorsektors mit einer Außenkante des Statormoduls ab, so dass der Statorsektor und ein mit einer Außenkante eines neben dem Statormodul angeordneten weiteren Statormoduls abschließender Statorsektor des weiteren Statormoduls aneinander anschließend angeordnet werden können. Bei einem derartigen Planarantriebssystem kann durch eine aneinander anschließende Anordnung mehrerer Statormodule eine lückenlose, zusammenhängende Statorfläche geschaffen werden, über welche sich der Läufer unterbrechungsfrei bewegen kann.

Bei einer Weiterbildung des Planarantriebssystems umfasst die Statoreinheit drei weitere Statorsektoren, wobei in der ersten Richtung und in der zweiten Richtung der Statorsektor und die weiteren Statorsektoren der Statoreinheit in je zwei Reihen nebeneinander und aneinander anschließend angeordnet sind und wobei die weiteren Statorsektoren in der ersten und zweiten Statorlage jeweils weitere der ersten bzw. zweiten Statorsegmente aufweisen.

Eine Anordnung mehrerer Statorsektoren in einer Statoreinheit eines einzelnen Statormoduls bewirkt, dass zur elektronischen Ansteuerung der Statorsegmente der einzelnen Statorsektoren eine gemeinsame Ansteuerelektronik in dem Statormodul genutzt werden kann. Es ist also nicht notwendig, für die einzelnen Statorsektoren jeweils eine separate Ansteuerelektronik vorzusehen. Außerdem kann die Ansteuerelektronik aller Statorsektoren des Statormoduls mittels je einer gemeinsamen Leitung an ein übergeordnetes Steuersystem und/oder an eine gemeinsame Energieversorgung angeschlossen werden.

Ein Statormodul zum Antrieb eines Läufers, welcher eine erste Magneteinheit mit in einer ersten Läuferrichtung nebeneinander angeordneten und entlang einer zu der ersten Läuferrichtung senkrecht orientierten zweiten Läuferrichtung ausgedehnten länglichen Antriebsmagneten und eine zweite Magneteinheit mit in der zweiten Läuferrichtung nebeneinander angeordneten und entlang der ersten Läuferrichtung ausgedehnten länglichen Antriebsmagneten aufweist, umfasst eine Statoreinheit. Die Statoreinheit umfasst einen ersten Statorsektor, einen zweiten Statorsektor, einen dritten Statorsektor und einen vierten Statorsektor. Die Statorsektoren umfassen jeweils in einer ersten Statorlage erste Statorsegmente zur Wechselwirkung mit den Antriebsmagneten der ersten Magneteinheit und in einer unter der ersten Statorlage angeordneten zweiten Statorlage zweite Statorsegmente zur Wechselwirkung mit den Antriebsmagneten der zweiten Magneteinheit. Die ersten Statorsegmente weisen entlang einer ersten Richtung nebeneinander angeordnete und entlang einer zu der ersten Richtung senkrecht orientierten zweiten Richtung ausgedehnte längliche Leiterstreifen auf und die zweiten Statorsegmente weisen entlang der zweiten Richtung nebeneinander angeordnete und entlang der ersten Richtung ausgedehnte längliche Leiterstreifen auf. Die Leiterstreifen der einzelnen Statorsegmente sind jeweils unabhängig von den Leiterstreifen der übrigen Statorsegmente bestrombar. Die ersten Statorsegmente des ersten, zweiten, dritten und vierten Statorsektors erstrecken sich in der zweiten Richtung jeweils über alle nebeneinander angeordneten zweiten Statorsegmente des ersten, zweiten, dritten bzw. vierten Statorsektors. Die zweiten Statorsegmente des ersten, zweiten, dritten und vierten Statorsektors erstrecken sich in der ersten Richtung jeweils über alle nebeneinander angeordneten ersten Statorsegmente des ersten, zweiten, dritten bzw. vierten Statorsektors. Die Statorsektoren bestehen in der ersten Statorlage aus drei unabhängig voneinander bestrombaren ersten Statorsegmenten und in der zweiten Statorlage aus drei unabhängig voneinander bestrombaren zweiten Statorsegmenten.

Zwei Statorsegmente sind genau dann unabhängig voneinander bestrombar, wenn alle Leiterstreifen des einen Statorsegments auf der Statoreinheit elektrisch isoliert sind von allen Leiterstreifen des anderen Statorsegments. Insbesondere umfassen die unabhängig voneinander bestrombaren Statorsegmente keine auf der Statoreinheit elektrisch leitend miteinander verbundenen Leiterstreifen. Außerdem sind alle Anschlüsse der Statoreinheit, über die die Leiterstreifen des einen Statorsegments kontaktierbar sind, elektrisch isoliert ausgeführt von allen Anschlüssen der Statoreinheit, über die die Leiterstreifen des anderen Statorsegments kontaktierbar sind. Dies schließt nicht aus, dass die beiden Statorsegmente oder die Anschlüsse der Leiterstreifen der beiden Statorsegmente auf anderen Einheiten, Modulen oder Komponenten des Statormoduls, beispielsweise auf einem Leistungsmodul des Statormoduls, elektrisch leitend miteinander verbunden sind.

Indem die Statoreinheit in vier Statorsektoren mit jeweils unabhängig voneinander bestrombaren Statorsegmenten unterteilt ist, kann der Läufer mittels der Statoreinheit auf effiziente Weise angetrieben werden. Insbesondere müssen zu jedem Zeitpunkt nur diejenigen Statorsegmente bestromt werden, in deren Nähe sich der Läufer befindet. Indem die Statorsegmente unabhängig voneinander bestromt werden, können außerdem mehrere Läufer unabhängig voneinander in einem das Statormodul umfassenden Planarantriebssystem bewegt werden.

Eine Anordnung mehrerer Statorsektoren auf einem Statormodul bewirkt zudem, dass zur elektronischen Ansteuerung der Statorsegmente der einzelnen Statorsektoren eine gemeinsame Ansteuerelektronik in dem Statormodul genutzt werden kann. Es ist also nicht notwendig, für die einzelnen Statorsektoren jeweils eine separate Ansteuerelektronik vorzusehen. Außerdem kann die Ansteuerelektronik aller Statorsektoren des Statormoduls mittels je einer gemeinsamen Leitung an ein übergeordnetes Steuersystem und/oder an eine gemeinsame Energieversorgung angeschlossen werden.

Bei einer Weiterbildung des Statormoduls umfassen die ersten Statorsegmente jeweils sechs nebeneinander angeordnete Leiterstreifen und die zweiten Statorsegmente umfassen ebenfalls jeweils sechs nebeneinander angeordnete Leiterstreifen. Bei derartigen Statorsegmenten können die Leiterstreifen der einzelnen Statorsegmente jeweils zu einem Dreiphasensystem mit einem gemeinsamen Sternpunkt zusammengeschaltet werden und von einer gemeinsamen dreiphasigen Stromerzeugungseinheit mit Strom versorgt werden. Das Statorsegment kann dadurch mit einer geringen Zahl von Stromerzeugungseinheiten betrieben werden.

Bei einer Weiterbildung des Statormoduls sind die Leiterstreifen der ersten Statorsegmente jeweils zu Dreiphasensystemen mit je einem gemeinsamen Sternpunkt je erstem Statorsegment zusammengeschaltet sind, und die Leiterstreifen der zweiten Statorsegmente sind ebenfalls jeweils zu Dreiphasensystemen mit je einem gemeinsamen Sternpunkt je zweitem Statorsegment zusammengeschaltet. Die Dreiphasensysteme der einzelnen ersten und zweiten Statorsegmente sind unabhängig voneinander bestrombar. Bei einem derartigen Statormodul können die Leiterstreifen mit einer geringen Anzahl von Stromerzeugungseinheiten bestromt werden.

Bei einer Weiterbildung des Statormoduls ist eine Außenkante des ersten Statorsektors abschließend mit einer ersten Au-βenkante des Statormoduls angeordnet und eine weitere Außenkante des ersten Statorsektors ist abschließend mit einer zweiten Außenkante des Statormoduls angeordnet. Eine Außenkante des zweiten Statorsektors ist abschließend mit der ersten Außenkante des Statormoduls angeordnet und eine Au-βenkante des dritten Statorsektors ist abschließend mit der zweiten Außenkante des Statormoduls angeordnet.

Dadurch wird es ermöglicht, den ersten Statorsektor des Statormoduls unmittelbar anschließend an einen ersten weiteren Statorsektor eines ersten weiteren Statormoduls und unmittelbar anschließend an einen zweiten weiteren Statorsektor eines zweiten weiteren Statormoduls anzuordnen, indem das erste weitere Statormodul anschließend an die erste Au-βenkante des Statormoduls und das zweite weitere Statormodul anschließend an die zweite Außenkante des Statormoduls angeordnet wird. Durch ein derartiges nahtloses Aneinanderfügen mehrerer Statormodule kann eine zusammenhängende Statorfläche geschaffen werden, bei welcher die Statorsektoren auch über Modulgrenzen hinweg aneinander anschließend angeordnet sind und sich der Läufer unterbrechungsfrei über die Statorflächen aller Statormodule bewegen kann.

Bei einer Weiterbildung des Statormoduls besteht die Statoreinheit aus dem ersten, zweiten, dritten und vierten Statorsektor. Eine weitere Außenkante des dritten Statorsektors und eine Außenkante des vierten Statorsektors sind abschließend mit einer dritten Außenkante des Statormoduls angeordnet. Eine weitere Außenkante des zweiten Statorsektors und eine weitere Außenkante des vierten Statorsektors sind abschließend mit einer vierten Außenkante des Statormoduls angeordnet.

Insbesondere können der erste Statorsektor, der zweite Statorsektor, der dritte Statorsektor und der vierte Statorsektor mit ihren beiden Außenkanten jeweils mit einer der Au-βenkanten des Statormoduls abschließen und die gesamte Oberfläche des Statormoduls kann lückenlos von den Statorsektoren abgedeckt werden. Damit kann die gesamte Oberfläche des Statormoduls auch lückenlos von den für den elektromagnetischen Antrieb des Läufers vorgesehenen Statorsegmenten abgedeckt werden, so dass auf der gesamten Oberfläche des Statormoduls eine lückenlose Kraftübertragung auf den Läufer möglich ist. Mehrere Statormodule, bei denen die Statorsektoren jeweils die gesamte Oberfläche des Statormoduls abdecken, können aneinander anschließend angeordnet werden und so lückenlos eine geschlossene Arbeitsfläche für die Bewegung des Läufers bilden

Bei einer Weiterbildung des Statormoduls ist eine Sektorbreite der Statorsektoren in der ersten Richtung kleiner als eine Ausdehnung einer die erste und zweite Magneteinheit umfassenden Magnetanordnung des Läufers in der ersten Läuferrichtung und eine Sektorlänge der Statorsektoren in der zweiten Richtung ist kleiner als eine Ausdehnung der Magnetanordnung in der zweiten Läuferrichtung.

Dadurch kann bei einem das Statormodul umfassenden Planarantriebssystem die Fläche, die für den Antrieb des Läufers zu bestromen ist, besonders gut an die Größe der Magnetanordnung angepasst werden. Insbesondere kann eine Fläche des Stators, die nicht von der Magnetanordnung überdeckt wird, für den Antrieb des Läufers aber dennoch zu bestromen ist, klein gehalten werde. Beispielsweise kann die von der Magnetanordnung nicht überdeckte bestromte Fläche in der ersten und der zweiten Richtung auf die Ausdehnung der Magnetanordnung in der ersten bzw. der zweiten Läuferrichtung begrenzt werden.

Bei einer Weiterbildung der Statoreinheit entspricht eine Segmentbreite der ersten Statorsegmente in der ersten Richtung einer Magnetisierungsperiode der ersten Magneteinheit und eine Segmentbreite der zweiten Statorsegmente in der zweiten Richtung entspricht einer Magnetisierungsperiode der zweiten Magneteinheit. Dadurch kann die Bestromung der entlang der ersten Richtung nebeneinander angeordneten Leiterstreifen der ersten Statorsegmente in Vielfachen der Magnetisierungsperiode der ersten Magneteinheit und die Bestromung der entlang der zweiten Richtung nebeneinander angeordneten Leiterstreifen der zweiten Statorsegmente in Vielfachen der Magnetisierungsperiode der zweiten Magneteinheit variiert werden. Damit kann die Anzahl der Leiterstreifen, die bei einer Bewegung des Läufers gleichzeitig bestromt werden müssen, klein gehalten werden.

Die Erfindung wird nachfolgend anhand von Ausführungsbeispielen und unter Bezugnahme auf Figuren näher erläutert. Dabei zeigen jeweils in schematischer Darstellung
- Fig. 1: ein Planarantriebssystem mit einem Statormodul;
- Fig. 2: eine Ansicht eines weiteren Planarantriebssystems mit sechs nebeneinander angeordneten Statormodulen;
- Fig. 3: einen Läufer für das Planarantriebssystem mit einer Magnetanordnung;
- Fig. 4: eine Aufsicht auf eine Magneteinheit der Magnetanordnung des Läufers;
- Fig. 5: eine Aufsicht auf die Magnetanordnung des Läufers;
- Fig. 6: das Statormodul des Planarantriebssystems;
- Fig. 7: eine Aufsicht auf das Statormodul mit einer Statoreinheit mit einem ersten, zweiten, dritten und vierten Statorsektor;
- Fig. 8: eine Explosionsansicht des ersten, zweiten, dritten und vierten Statorsektors und der Magnetanordnung;
- Fig. 9: Aufsichten auf die Magnetanordnung und auf erste Statorsegmente der Statorsektoren;
- Fig. 10: Aufsichten auf die Magnetanordnung und auf zweite Statorsegmente der Statorsektoren;
- Fig. 11: Seitenansichten der Magneteinheiten der Magnetanordnung und der Statorsektoren;
- Fig. 12: Seitenansichten der Statorsektoren und einer weiteren Magneteinheit;
- Fig. 13: ein Ersatzschaltbild von Dreiphasensystemen der ersten Statorsegmente des ersten Statorsektors;
- Fig. 14: ein Ersatzschaltbild von Dreiphasensystemen der zweiten Statorsegmente des ersten Statorsektors;
- Fig. 15: ein Ersatzschaltbild der Dreiphasensysteme der ersten und zweiten Statorsegmente des ersten Statorsektors.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten Planarantriebssysteme. Der Offenbarungsgehalt der genannten Druckschriften wird durch Bezugnahme vollumfänglich auch zum Gegenstand der vorliegenden Beschreibung gemacht.

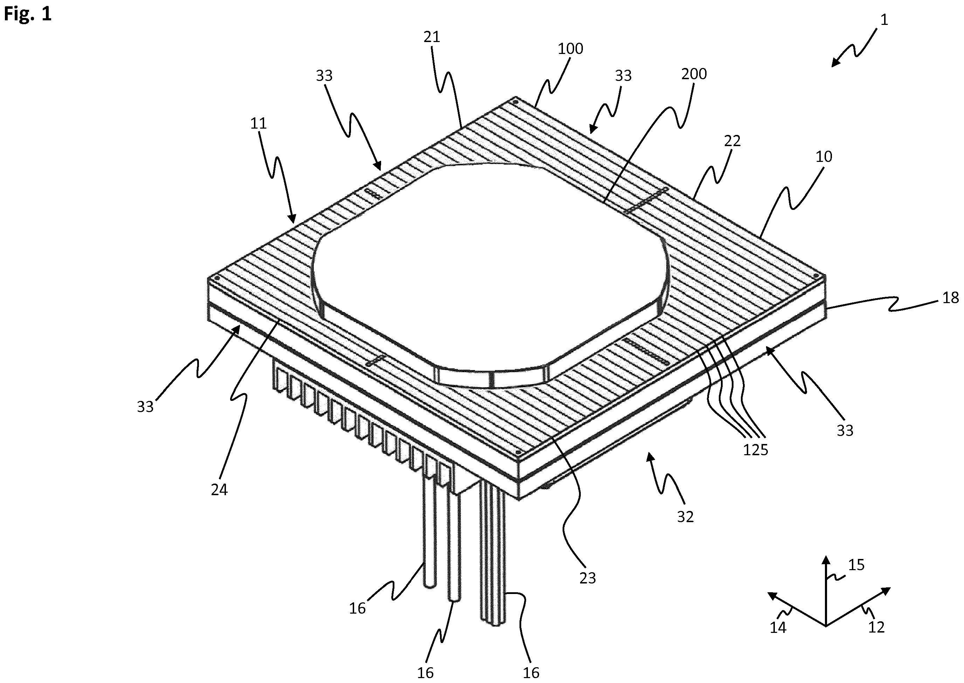

Fig. 1 zeigt ein Planarantriebssystem 1 mit einem Statormodul 10 und einem Läufer 200. Das Statormodul 10 umfasst ein Modulgehäuse 18 und eine Statoreinheit 100, welche an einer Oberseite des Modulgehäuses 18 angeordnet ist. Die Statoreinheit 100 ist als ein Planarstator ausgebildet und weist eine ebene bzw. planare Statorfläche 11 auf. Die Statorfläche 11 erstreckt sich über die gesamte Oberseite der Statoreinheit 100 und des Statormoduls 10. Die Statoreinheit 100 umfasst an der Statorfläche 11 mehrere mit Antriebsströmen bestrombare Leiterstreifen 125. Mittels der Antriebsströme in den Leiterstreifen 125 kann ein Magnetfeld erzeugt werden, welches den Läufer 200 in Wechselwirkung mit in Fig. 1 nicht dargestellten Antriebsmagneten des Läufers 200 antreibt.

Der Läufer 200 ist im Betrieb beweglich über der Statorfläche 11 des Statormoduls 10 angeordnet und kann sowohl in einer ersten Richtung 12, als auch in einer zu der ersten Richtung 12 senkrecht orientierten zweiten Richtung 14 angetrieben werden. Indem der Läufer 200 zugleich in der ersten Richtung 12, als auch in der zweiten Richtung 14 angetrieben wird, kann er über der Statorfläche 11 in einer beliebigen Richtung angetrieben werden. Allgemein kann der Läufer 200 im Betrieb in einer ersten und in einer von der ersten Richtung linear unabhängigen zweiten Richtung angetrieben werden. Der Läufer 200 kann beispielsweise durch eine magnetische Wechselwirkung zwischen den Antriebsmagneten und geeigneten Antriebsströmen in den Leiterstreifen 125 schwebend über der Statorfläche 11 gehalten werden. Zusätzlich zu dem Antreiben des Läufers 200 in der ersten Richtung 12 und in der zweiten Richtung 14 kann der Läufer 200 auch in einer zu der ersten Richtung 12 und der zweiten Richtung 14 senkrecht orientierten dritten 15 Richtung angetrieben werden. Durch das Antreiben des Läufers 200 in der dritten Richtung 15 kann der Abstand des Läufers 200 zu der Statorfläche 11 variiert werden, der Läufer 200 also über der Statorfläche 11 angehoben oder abgesenkt werden.

In dem Modulgehäuse 18 sind Elektronikmodule für den Antrieb und für die Steuerung des Läufers 200 angeordnet. Die Elektronikmodule können beispielsweise Leistungsmodule zur Erzeugung der Antriebsströme und Steuermodule zur Steuerung der Leistungsmodule und der Antriebsströme umfassen. Auf einer der Statorfläche 11 gegenüberliegenden Unterseite 32 des Modulgehäuses 18 sind in Fig. 1 nicht dargestellte Anschlüsse angeordnet zur Verbindung des Statormoduls 10 mit mehreren Anschlussleitungen 16. Die Anschlussleitungen 16 können beispielsweise eine Steuerleitung zur Übertragung von Steuersignalen für die Steuermodule und eine Energieversorgungsleitung zur Versorgung der Leistungs- und/oder Steuermodule mit elektrischer Energie umfassen. Insbesondere kann dem Leistungsmodul über die Energieversorgungsleitung elektrische Energie zur Erzeugung der Antriebsströme zugeführt werden.

Das Modulgehäuse 18, die Statoreinheit 100 und die Statorfläche 11 sind in der Aufsicht auf die Statorfläche 11 rechteckig, insbesondere quadratisch, ausgebildet. Das Statormodul 10 und das Modulgehäuse 18 weisen zwischen der Statorfläche 11 und der gegenüberliegenden Unterseite 32 vier Seitenflächen 33 auf. Die Seitenflächen 33 sind jeweils senkrecht zu der Statorfläche 11 orientiert und als ebene bzw. planare Flächen ausgebildet. Die Seitenflächen 33 des Statormoduls 10 schließen an der Oberseite des Statormoduls 10 jeweils bündig mit der rechteckigen Statorfläche 11 ab. Insbesondere erstreckt sich die Statorfläche 11 in der ersten Richtung 12 und in der zweiten Richtung 14 jeweils zwischen zwei der Seitenflächen 33.

Bei dem Statormodul 10 grenzt die Statorfläche 11 an einer ersten Außenkante 21, einer zweiten Außenkante 22, einer dritten Außenkante 23 und einer vierten Außenkante 24 an die Seitenflächen 33 des Statormoduls 10 an. Die Außenkanten 21, 22, 23, 24 begrenzen die Statorfläche 11 bzw. die Statoreinheit 100 an den Seitenflächen 33 des Statormoduls 10.

Mehrere Exemplare des Statormoduls 10 können derart nebeneinander angeordnet werden, dass die Außenkanten 21, 22, 23, 24 benachbarter Statormodule 10 aneinander liegen und die Statorflächen 11 der Statormodule 10 eine zusammenhängende Arbeitsfläche bilden, über die der Läufer unterbrechungsfrei bewegt werden kann. Da die Seitenflächen 33 des Statormoduls 10 an den Außenkanten 21, 22, 23, 24 bündig mit der Statorfläche 11 abschließen, können die Statorflächen 11 von zwei nebeneinander angeordneten Statormodulen 10 nahezu nahtlos aneinander anschließend angeordnet werden, indem die Statormodule 10 mit aneinander anschließenden Seitenflächen 33 bzw. aneinander liegenden Außenkanten 21, 22, 23, 24 angeordnet werden.

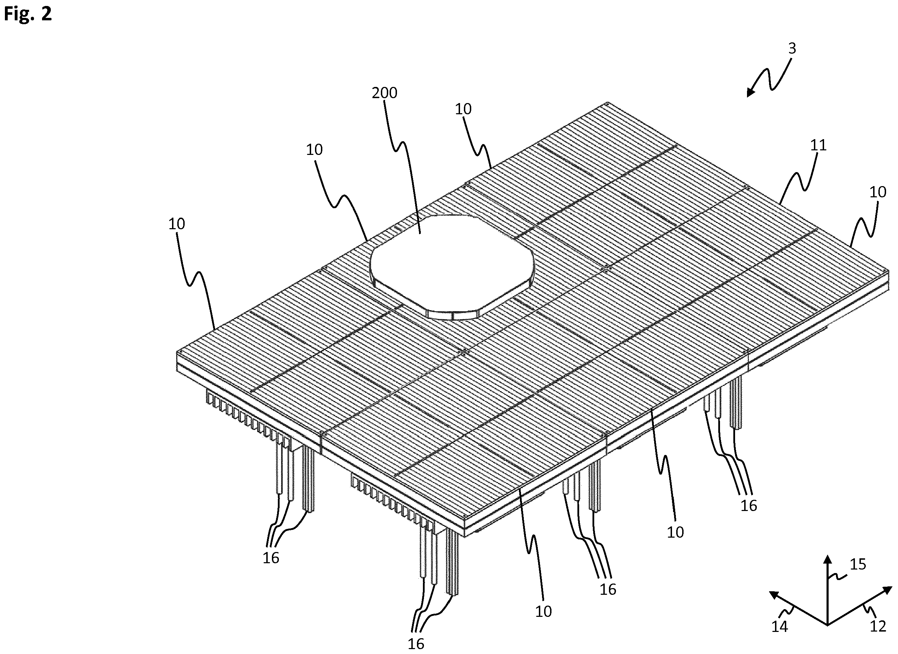

**Fig. 2** zeigt eine Ansicht eines weiteren Planarantriebssystems 3 mit sechs nebeneinander angeordneten Statormodulen 10. Die Statormodule 10 sind ausgebildet wie das in Fig. 1 dargestellte Statormodul 10. Die Statormodule 10 sind in zwei in der ersten Richtung 12 nebeneinanderliegenden und entlang der zweiten Richtung 14 ausgedehnten ersten Reihen und in drei in der zweiten Richtung 14 nebeneinanderliegenden und entlang der ersten Richtung 12 ausgedehnten zweiten Reihen bzw. Spalten nebeneinander angeordnet. Benachbarte Statormodule 10 sind jeweils derart aneinander anschließend angeordnet, dass die Außenkanten 21, 22, 23, 24 benachbarter Statormodule 10 aneinander liegen. Dadurch bilden die Statorflächen 11 eine zusammenhängende, planare Arbeitsfläche für den Läufer 200. Der Läufer 200 kann nahtlos von der Statorfläche 11 eines der Statormodule 10 auf die bzw. über die Statorfläche 11 des benachbarten Statormoduls 10 bewegt werden.

Die Statormodule 10 können in der ersten und zweiten Richtung 12, 14 prinzipiell zu Planarantriebssystemen beliebiger Größe zusammengefügt werden. Jedem der Statormodule 10 können über jeweils eigene Anschlussleitungen 16 Steuersignale und/oder Energie zugeführt werden. Alternative, hier nicht dargestellte, Ausführungsformen der Statormodule 10 können auch elektrische Verbindungselemente aufweisen, mittels derer Steuersignale und/oder elektrische Energie von einem Statormodul 10 zum benachbarten Statormodul 10 übertragen werden kann. Derartige Verbindungselemente können beispielsweise an den Seitenflächen 33 der Statormodule 10 angeordnet sein. Die Verbindungselemente können als Steckverbinder oder als aneinander anordbare Kontaktflächen ausgebildet sein.

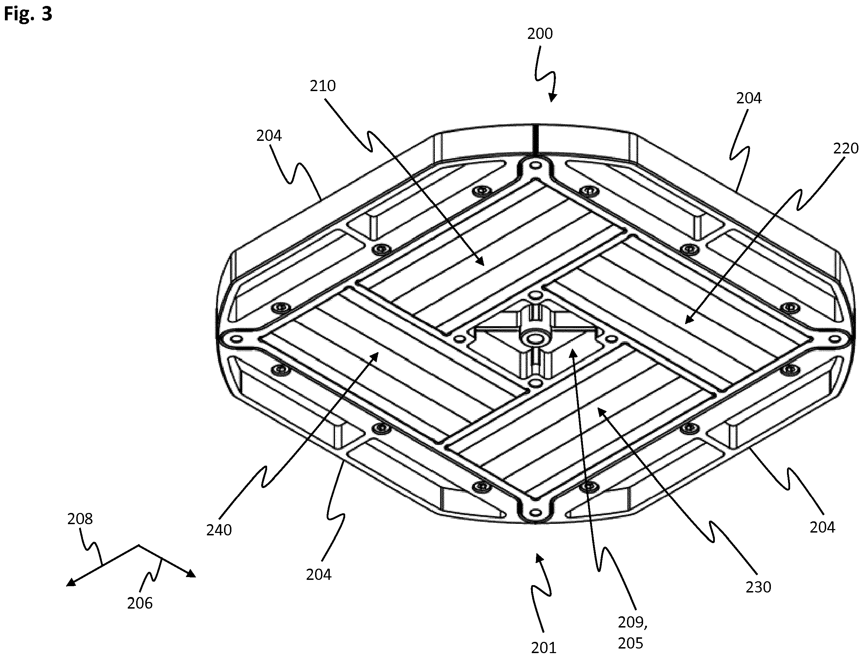

**Fig. 3** zeigt den Läufer 200 des Planarantriebssystems 1 in einer Ansicht von unten auf eine Unterseite des Läufers 200. Im Betrieb des Planarantriebssystem 1 ist die Unterseite des Läufers 200 der Statorfläche 11 des Statormoduls 10 zugewandt angeordnet. Der Läufer 200 weist an der Unterseite eine Magnetanordnung 201 auf. Die Magnetanordnung 201 ist rechteckig, insbesondere quadratisch, ausgebildet und umfasst mehrere Magneten. Die Unterseite des Läufers 200 ist, insbesondere im Bereich der Magneten der Magnetanordnung 201, eben bzw. planar ausgebildet. Im Betrieb ist die Unterseite des Läufers 200 mit der Magnetanordnung 201 im Wesentlichen parallel zu der Statorfläche 11 orientiert und der Statorfläche 11 zugewandt angeordnet.

Die Magnetanordnung 201 umfasst eine erste Magneteinheit 210, eine zweite Magneteinheit 220, eine dritte Magneteinheit 230 und eine vierte Magneteinheit 240. Die erste Magneteinheit 210 und die dritte Magneteinheit 230 weisen jeweils in einer ersten Läuferrichtung 206 nebeneinander angeordnete und entlang einer zu der ersten Läuferrichtung 206 senkrecht orientierten zweiten Läuferrichtung 208 ausgedehnte längliche Antriebsmagnete auf. Die zweite Magneteinheit 220 und die vierte Magneteinheit 240 weisen jeweils in der zweiten Läuferrichtung 208 nebeneinander angeordnete und entlang der ersten Läuferrichtung 206 ausgedehnte längliche Antriebsmagnete auf. Die erste und dritte Magneteinheit 210, 230 dient im Betrieb einem Antrieb des Läufers 200 in der ersten Läuferrichtung 206 und die zweite und vierte Magneteinheit 220, 240 dient im Betrieb einem Antrieb des Läufers 200 in der zweiten Läuferrichtung 208.

Der Läufer 200 weist vier Abstandshalter 204 auf, die an vier Außenseiten der Magnetanordnung 201 angeordnet sind. Die Abstandshalter 204 sind derart an dem Läufer 200 angeordnet und ausgeformt, dass auch bei sich berührenden Abstandshaltern 204 zweier nebeneinander angeordneter Läufer 200 ein Mindestabstand zwischen den Magnetanordnungen 210 der zwei nebeneinander angeordneten Läufer 200 eingehalten wird. Der Mindestabstand kann derart bemessen sein, dass Anziehungskräfte zwischen den Magnetanordnungen benachbarter Läufer 200 eine Höchstkraft nicht überschreiten. Die Höchstkraft kann derart bemessen sein, dass es ausgeschlossen ist, dass die Unterseiten benachbarter Läufer 200 aufgrund der Anziehungskraft zwischen den Magneten ihrer Magnetanordnungen 201 aus der zur Statorfläche 11 parallelen Position aufgerichtet werden und die beiden Läufer mit einander zugewandten Unterseiten aneinander magnetisch haften blieben. Die Abstandshalter 204 können dazu ausgebildet sein, bei einer Berührung zweier Läufer 200 Energie aufzunehmen. Die Abstandshalter 204 können ein elastisch verformbares Material aufweisen oder aus einem solchen Material bestehen.

In der Mitte der Magnetanordnung 201 weist der Läufer 200 eine Freifläche 209 auf, die nicht von Magneten der Magnetanordnung 201 bedeckt wird. Im Bereich der Freifläche 209 weist der Läufer 200 eine Befestigungsstruktur 205 auf. An der Befestigungsstruktur 205 kann eine auf dem Läufer 200 angeordnete Nutzlast oder ein auf dem Läufer 200 angeordneter Aufbau befestigt werden. Die Befestigungsstruktur 205 kann als von einer Oberseite des Läufers 200 zugängliche Bohrungen, insbesondere als Gewindebohrungen, ausgebildet sein.

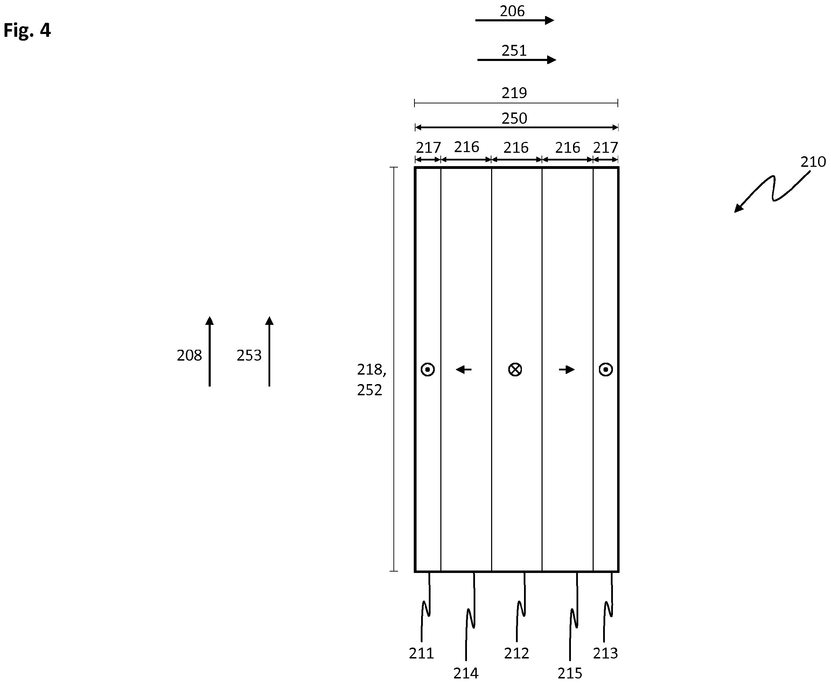

**Fig. 4** zeigt eine Aufsicht auf die erste Magneteinheit 210 der Magnetanordnung 201 des Läufers 200. Bei der in Fig. 4 dargestellten Aufsicht befindet sich die Statorfläche 11 des Statormoduls 10 im Betrieb des Planarantriebssystems 1 in der Zeichenblattebene gesehen hinter bzw. unter der dargestellten ersten Magneteinheit 210. Soweit keine Unterschiede beschrieben werden, sind die in Figur 3 dargestellte zweite, dritte und vierte Magneteinheit 220, 230, 240 identisch zu der ersten Magneteinheit 210 ausgebildet.

Die erste Magneteinheit 210 ist rechteckig ausgebildet. Sie weist in einer Breitenrichtung 251 eine Breite 250 auf, die kleiner ist als eine Länge 252 der ersten Magneteinheit 210 in einer zu der Breitenrichtung 251 senkrecht orientierten Längenrichtung 253. Bei der ersten Magneteinheit 210 entspricht die Breitenrichtung 251 der ersten Läuferrichtung 206 und die Längenrichtung 253 der zweiten Läuferrichtung 208. Analog verläuft eine Breitenrichtung der dritten Magneteinheit 230 parallel zu der ersten Läuferrichtung 206 und eine Längenrichtung der dritten Magneteinheit 230 verläuft parallel zu der zweiten Lauferrichtung 208. Eine Breitenrichtung der zweiten Magneteinheit 220 und eine Breitenrichtung der vierten Magneteinheit 240 verlaufen parallel zu der zweiten Läuferrichtung 208. Eine Längenrichtung der zweiten Magneteinheit 220 und eine Längenrichtung der vierten Magneteinheit 240 verlaufen parallel zu der ersten Läuferrichtung 206.

Die erste Magneteinheit 210 umfasst einen ersten Antriebsmagneten 211, einen ersten Kompensationsmagneten 214, einen zweiten Antriebsmagneten 212, einen zweiten Kompensationsmagneten 215 und einen dritten Antriebsmagneten 213, die im Folgenden auch Allgemein als Magneten 211, 212, 213, 214, 215 bezeichnet werden. Die Magneten 211, 212, 213, 214, 215 sind länglich und entlang der Breitenrichtung 251 der ersten Magneteinheit 210 ausgedehnt ausgebildet, das heißt, sie weisen in der Aufsicht eine rechteckige Querschnittsfläche auf, deren Breite in der Breitenrichtung 251 kleiner ist als ihre Länge in der Längenrichtung 253.

In Breitenrichtung 251 ist der erste Antriebsmagnet 211 an einem Rand der ersten Magneteinheit 210 und der dritte Antriebsmagnet 213 an einem gegenüberliegenden Rand der ersten Magneteinheit 210 angeordnet. Der erste Kompensationsmagnet 214 ist neben dem ersten Antriebsmagneten 211, der zweite Antriebsmagnet 212 neben dem ersten Kompensationsmagneten 214, der zweite Kompensationsmagnet 215 neben dem zweiten Antriebsmagneten 212 und der dritte Antriebsmagnet 213 neben dem zweiten Kompensationsmagneten 215 angeordnet. Die Magneten 211, 212, 213, 214, 215 sind jeweils aneinander anschließend, insbesondere ohne Zwischenraum aneinander anschließend, angeordnet.

Die Magneten im Inneren der ersten Magnetanordnung 210, also der erste Kompensationsmagnet 214, der zweite Antriebsmagnet 212 und der zweite Kompensationsmagnet 215 weisen in der ersten Läuferrichtung 206 und in der Breitenrichtung 251 eine Breite auf, die einer ersten Magnetbreite 216 entspricht. Die am Rand liegenden Magnete, also der erste und der dritte Antriebsmagnet 211, 213, weisen in der ersten Läuferrichtung 206 und in der Breitenrichtung 251 eine Breite auf, die einer zweiten Magnetbreite 217 entspricht. Die zweite Magnetbreite 217 entspricht der Hälfte der ersten Magnetbreite 216. Die Magneten 211, 212, 213, 214, 215 weisen in der zweiten Läuferrichtung 208 und in der Längenrichtung 253 eine Magnetlänge 218 auf, die dem Achtfachen der ersten Magnetbreite 216 entspricht. Die erste Magneteinheit 210 weist damit entlang der Breitenrichtung 251 eine Breite 250 auf, die dem Vierfachen der ersten Magnetbreite 216 entspricht. Entlang der Längenrichtung 253 weist die erste Magneteinheit 210 eine Länge 252 auf, die dem Zweifachen ihrer Breite 250 bzw. dem Achtfachen der ersten Magnetbreite 216 entspricht.

Der erste Antriebsmagnet 211 und der dritte Antriebsmagnet 213 weisen jeweils eine Magnetisierung auf, welche in Richtung einer der Unterseite des Läufers 200 gegenüberliegenden Oberseite des Läufers 200 orientiert ist. Der zweite Antriebsmagnet 212 weist eine Magnetisierung auf, die von der Oberseite des Läufers 200 in Richtung der Unterseite des Läufers 200 orientiert ist. Der erste Kompensationsmagnet 214 weist eine Magnetisierung auf, die von dem ersten Antriebsmagneten 211 in Richtung des zweiten Antriebsmagneten 212 orientiert ist, und der zweite Kompensationsmagnet 215 weist eine Magnetisierung auf, die von dem dritten Antriebsmagneten 213 in Richtung des zweiten Antriebsmagneten 212 orientiert ist. Die Magneten 211, 212, 213, 214, 215 der ersten Magneteinheit 210 sind in einer Halbach-Array-Konfiguration angeordnet, bei der das Feld der Antriebsmagneten 211, 212, 213 durch das Feld der Kompensationsmagneten 214, 215 auf der der Unterseite des Läufers 200 zugewandten Seite der Magnetanordnung 201 verstärkt und auf der der Oberseite des Läufers 200 zugewandten Seite der Magnetanordnung 201 abgeschwächt bzw. kompensiert wird.

Die erste Magneteinheit 210 erzeugt ein Magnetfeld, welches im Bereich unter der ersten Magneteinheit 210 entlang der Längenrichtung 253 im Wesentlichen homogen ist und entlang der Breitenrichtung 251 im Wesentlichen einen harmonischen, d.h. sinus- bzw. cosinusförmigen, Verlauf aufweist. Die Periodizität des harmonischen Feldverlaufs entspricht im Wesentlichen der Breite 250 der ersten Magneteinheit 210.

Abgesehen von Randeffekten, die durch die endliche Ausdehnung der ersten Magneteinheit 210 in der Breitenrichtung 251 verursacht werden, entspricht der Feldverlauf des durch die Magneten 211, 212, 213, 214, 215 erzeugten Magnetfeldes demjenigen Feldverlauf, der durch eine wiederholte periodische Aneinanderreihung der Magneten 211, 212, 213, 214, 215 der ersten Magneteinheit 210 entlang der Breitenrichtung 251 erzeugt werden würde. Bei einer derartigen Aneinanderreihung wiederholten sich die Magnetisierungsrichtungen der einzelnen Magneten nach einer Magnetisierungsperiode 219, welche der Breite 250 der ersten Magneteinheit 210 bzw. dem Vierfachen der ersten Magnetbreite 216 entspricht. Insofern entspricht die Magnetisierungsperiode 219 der ersten Magneteinheit 210 dem Vierfachen der ersten Magnetbreite 216 und der Breite 250 der ersten Magneteinheit 210. Die Länge 252 der ersten Magneteinheit 210 und die Magnetlänge 218 entspricht dem Zweifachen der Magnetisierungsperiode 219.

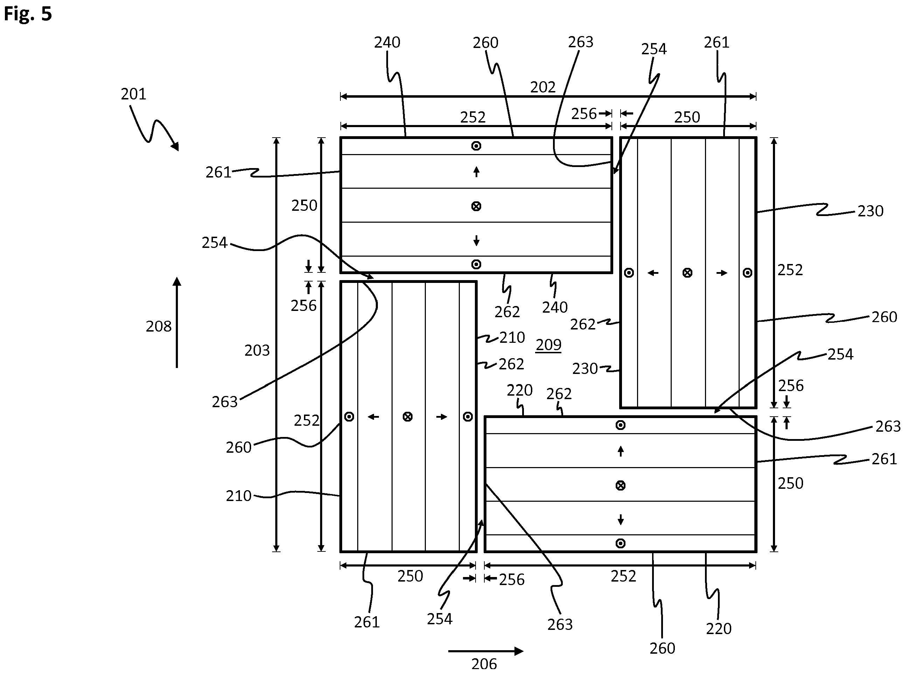

**Fig. 5** zeigt eine Aufsicht auf die Magnetanordnung 201 des Läufers 200 mit den vier Magneteinheiten 210, 220, 230, 240. Wie bei der in Fig. 4 dargestellten Aufsicht, befindet sich bei der in Fig. 5 dargestellten Aufsicht die Statorfläche 11 des Statormoduls 10 im Betrieb des Planarantriebssystems 1 hinter bzw. unter den dargestellten Magneteinheiten 210, 220, 230, 240.

Die Magnetanordnung 201 ist rechteckig, insbesondere quadratisch, ausgebildet. Eine Ausdehnung der Magnetanordnung 201 in der ersten Läuferrichtung 206 entspricht einer Ausdehnung der Magnetanordnung 201 in der zweiten Läuferrichtung 208.

Bei der Magnetanordnung 201 sind die erste und die dritte Magneteinheit 210, 230 mit ihrer Breitenrichtung 251 (entsprechend Fig. 4) entlang der ersten Läuferrichtung 206 und mit ihrer Längenrichtung 253 entlang der zweiten Läuferrichtung 208 angeordnet. Die zweite und die vierte Magneteinheit 220, 240 sind mit ihrer Breitenrichtung 251 entlang der zweiten Läuferrichtung 208 und mit ihrer Längenrichtung 253 entlang der ersten Läuferrichtung 206 angeordnet. Die erste und dritte Magneteinheit 210, 230 sind also um 90° gedreht gegenüber der zweiten und vierten Magneteinheit 220, 240 angeordnet. Die Magneteinheiten 210, 220, 230, 240 sind um die Freifläche 209 in der Mitte der Magnetanordnung 201 herum angeordnet.

Bei der Magnetanordnung 201 sind die länglichen Magnete 211, 212, 213, 214, 215, insbesondere die Antriebsmagnete 211, 212, 213, der ersten Magneteinheit 210 und der dritten Magneteinheit 230 in der ersten Läuferrichtung 206 nebeneinander angeordnet und entlang der zu der ersten Läuferrichtung 206 senkrecht orientierten zweiten Läuferrichtung 208 ausgedehnt. Die länglichen Magnete, insbesondere die Antriebsmagnete, der zweiten Magneteinheit 220 und der vierten Magneteinheit 240 sind in der zweiten Läuferrichtung 208 nebeneinander angeordnet und entlang der ersten Läuferrichtung 206 ausgedehnt.

Die Breite 250 bzw. Ausdehnung der ersten Magneteinheit 210 und der dritten Magneteinheit 230 in der ersten Läuferrichtung 206 entspricht der Magnetisierungsperiode 219 der ersten und dritten Magneteinheit 210, 230. Die Breite 250 bzw. Ausdehnung der zweiten Magneteinheit 220 und der vierten Magneteinheit 240 in der zweiten Läuferrichtung 208 entspricht der Magnetisierungsperiode 219 der zweiten und vierten Magneteinheit 220, 240. Die Länge 252 bzw. Ausdehnung der ersten Magneteinheit 210 und der dritten Magneteinheit 230 in der zweiten Läuferrichtung 208 entspricht jeweils der doppelten Magnetisierungsperiode 219 der zweiten und der vierten Magneteinheit 220, 240. Die Länge 252 bzw. Ausdehnung der zweiten Magneteinheit 220 und der vierten Magneteinheit 240 in der ersten Läuferrichtung 208 entspricht jeweils der doppelten Magnetisierungsperiode 219 der ersten und der dritten Magneteinheit 220, 240.

Am Außenrand der Magnetanordnung 201 ist eine in der zweiten Läuferrichtung 208 verlaufende äußere Längskante 260 der ersten Magneteinheit 210 fluchtend mit einer in der zweiten Läuferrichtung 208 verlaufenden äußeren Querkante 261 der vierten Magneteinheit 240 angeordnet. Eine in der ersten Läuferrichtung 206 verlaufende äußere Längskante 260 der zweiten Magneteinheit 220 ist fluchtend mit einer in der ersten Läuferrichtung 206 verlaufenden äußeren Querkante 261 der ersten Magneteinheit 210 angeordnet. Eine in der zweiten Läuferrichtung 208 verlaufende äußere Längskante 260 der dritten Magneteinheit 230 ist fluchtend mit einer in der zweiten Läuferrichtung 208 verlaufenden äußeren Querkante 261 der vierten Magneteinheit 240 angeordnet. Eine in der ersten Läuferrichtung 206 verlaufende äußere Längskante 260 der vierten Magneteinheit 240 ist fluchtend mit einer in der ersten Läuferrichtung 206 verlaufenden äußeren Querkante 261 der dritten Magneteinheit 230 angeordnet.

Die erste und die zweite Magneteinheit 210, 220, die zweite und die dritte Magneteinheit 220, 230, die dritte und die vierte Magneteinheit 230, 240, sowie die vierte und die erste Magneteinheit 240, 210 sind jeweils durch einen Zwischenraum 254 voneinander beabstandet nebeneinander angeordnet. Der Zwischenraum 254 befindet sich jeweils zwischen einer in der ersten Läuferrichtung 206 verlaufenden inneren Querkante 263 der ersten Magneteinheit 210 und einer in der ersten Läuferrichtung 206 verlaufenden inneren Längskante 262 der vierten Magneteinheit 240, zwischen einer in der zweiten Läuferrichtung 208 verlaufenden inneren Querkante 263 der vierten Magneteinheit 240 und einer in der zweiten Läuferrichtung 208 verlaufenden inneren Längskante 262 der dritten Magneteinheit 230, zwischen einer in der ersten Läuferrichtung 206 verlaufenden inneren Querkante 263 der dritten Magneteinheit 230 und einer in der ersten Läuferrichtung 206 verlaufenden inneren Längskante 262 der zweiten Magneteinheit 220 bzw. zwischen einer in der zweiten Läuferrichtung 208 verlaufenden inneren Querkante 263 der zweiten Magneteinheit 220 und einer in der zweiten Läuferrichtung 208 verlaufenden inneren Längskante 262 der ersten Magneteinheit 210.

Eine Ausdehnung 202 der Magnetanordnung 201 in der ersten Läuferrichtung 206, d.h. die Breite der Magnetanordnung 201, und eine Ausdehnung 203 der Magnetanordnung 201 in der zweiten Läuferrichtung 208, d.h. die Länge der Magnetanordnung 201, entsprechen der Summe aus der Breite 250 der Magneteinheiten 210, 220, 230, 240, der Länge 252 der Magneteinheiten 210, 220, 230, 240 und der Breite 256 der Zwischenräume 254.

Der Zwischenraum 254 kann in Richtung der äußeren Längskanten 260 und der äußeren Querkanten 261 aneinander liegender Magneteinheiten 210, 220, 230, 240 jeweils eine Breite 256 aufweisen, die einem Zwölftel der Magnetisierungsperiode 219 der Magneteinheiten 210, 220, 230, 240 entspricht.

Die Magnetisierungsperiode 219 kann beispielsweise 40 mm betragen. Die Breite 250 der Magnetanordnungen 210, 220, 230, 240 kann ebenfalls 40 mm und ihre Länge 80 mm betragen. Die erste Magnetbreite 216 kann 10 mm betragen. Die Ausdehnung 202 der Magnetanordnung 201 in der ersten Läuferrichtung 206 und die Ausdehnung 203 der Magnetanordnung 201 in der zweiten Läuferrichtung 208 kann jeweils 123,33 mm betragen.

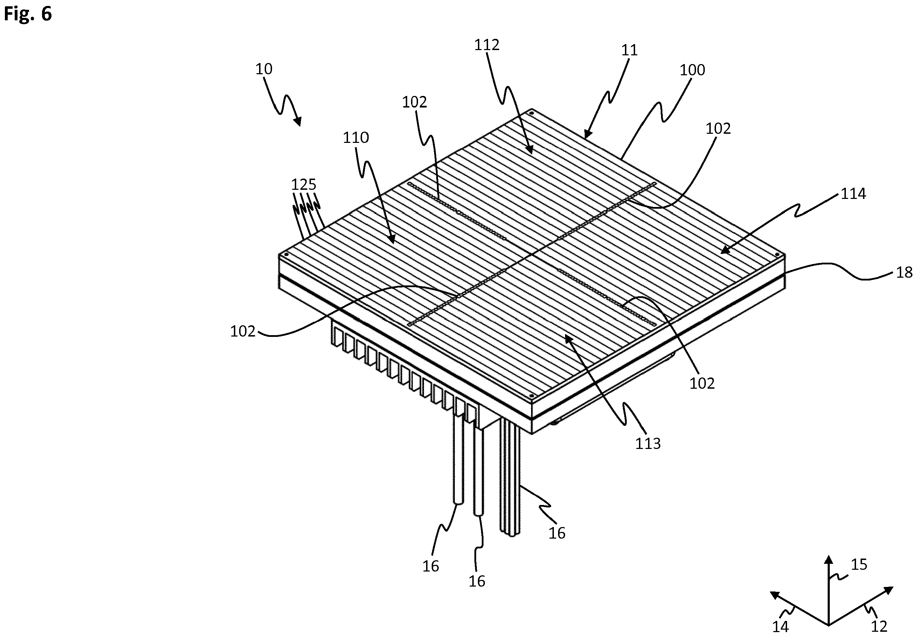

**Fig. 6** zeigt das Statormodul 10 des Planarantriebssystems 1 in einer isometrischen Ansicht ohne den Läufer 200. Die Statoreinheit 100 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der jeweils elektrisch voneinander isolierten Leiterstreifen 125. Jeder der Leiterstreifen 125 ist vollständig in einem der Statorsektoren 110, 112, 113, 114 angeordnet. Die Statorsektoren 110, 112, 113, 114 sind rechteckig ausgebildet. Insbesondere können die Statorsektoren 110, 112, 113, 114 quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht.

Die Statorsektoren 110, 112, 113, 114 sind in der ersten Richtung 12 in zwei nebeneinanderliegenden Reihen und in der zweiten Richtung 14 ebenfalls in zwei nebeneinanderliegenden Reihen aneinander anschließend angeordnet. Die Statorsektoren 110, 112, 113, 114 benachbarter Reihen sind ebenfalls jeweils aneinander anschließend angeordnet. In der ersten Richtung 12 umfasst die Statoreinheit 100 eine Reihe mit dem ersten Statorsektor 110 und dem zweiten Statorsektor 112 und eine weitere Reihe mit dem dritten Statorsektor 113 und dem vierten Statorsektor 114. In der zweiten Richtung 14 umfasst die Statoreinheit 100 eine Reihe mit dem ersten Statorsektor 110 und dem dritten Statorsektor 113 und eine weitere Reihe mit dem zweiten Statorsektor 112 und dem vierten Statorsektor 114.

Die Statorsektoren 110, 112, 113, 114 weisen in der ersten Richtung 12 und in der zweiten Richtung 14 jeweils eine Ausdehnung auf, die halb so groß ist wie eine Ausdehnung der Statoreinheit 100 bzw. des Statormoduls 10 in der entsprechenden Richtung. Die Grenzen der Statorsektoren 110, 112, 113, 114 verlaufen damit in der ersten und in der zweiten Richtung 12, 14 jeweils in der Mitte der Statoreinheit 100 und schneiden sich im Zentrum der Statoreinheit 100. Die Statorsektoren 110, 112, 113, 114 umfassen jeweils ein Viertel der Fläche, d.h. einen Quadranten, der Statoreinheit 100.

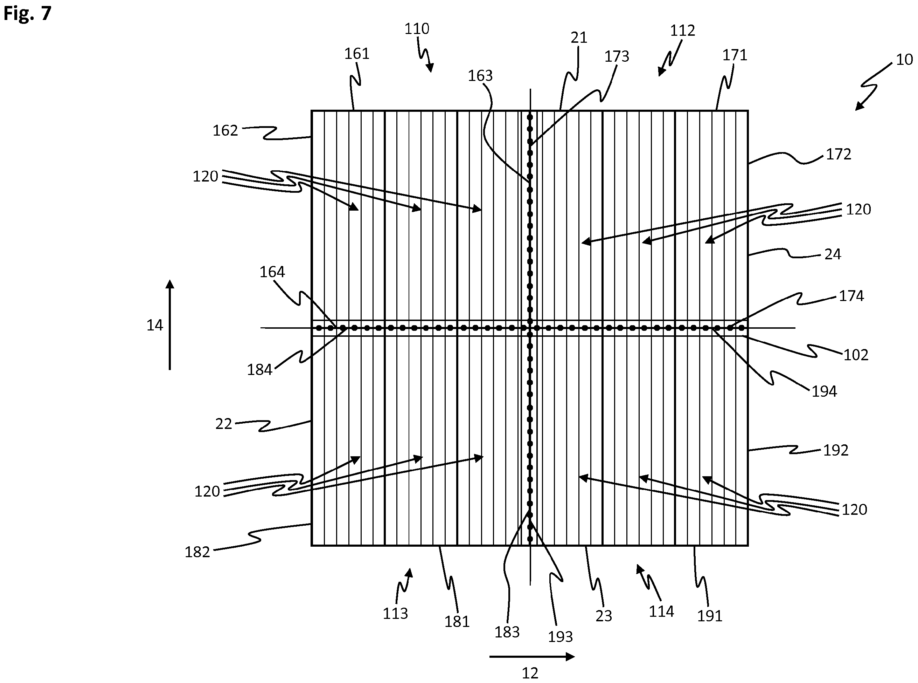

**Fig. 7** zeigt eine Aufsicht auf das Statormodul 10 mit der Statoreinheit 100 und den Statorsektoren 110, 112, 113, 114. Die Statorsektoren 110, 112, 113, 114 schließen an den Au-βenseiten bündig mit dem Statormodul 10 ab. Insbesondere sind eine erste Außenkante 161 des ersten Statorsektors 110 und eine erste Außenkante 171 des zweiten Statorsektors 112 abschließend mit einer ersten Außenkante 21 des Statormoduls 10 angeordnet. Eine zweite Außenkante 162 des ersten Statorsektors 110 und eine zweite Außenkante 182 des dritten Statorsektors 113 sind abschließend mit einer zweiten Außenkante 22 des Statormoduls 10 angeordnet. Eine erste Außenkante 181 des dritten Statorsektors 113 und eine erste Au-βenkante 191 des vierten Statorsektors 114 sind abschließend mit einer dritten Außenkante 23 des Statormoduls 10 angeordnet. Eine zweite Außenkante 172 des zweiten Statorsektors 112 und eine zweite Außenkante 192 des vierten Statorsektors 114 sind abschließend mit einer vierten Außenkante 24 des Statormoduls 10 angeordnet.

Im Inneren der Statoreinheit 100 sind die Statorsektoren 110, 112, 113, 114 aneinander anschließend angeordnet. Eine erste Innenkante 163 des ersten Statorsektors 110 ist an einer ersten Innenkante 173 des zweiten Statorsektors 112 angeordnet. Eine zweite Innenkante 174 des zweiten Statorsektors 112 ist an einer zweiten Innenkante 194 des vierten Statorsektors 114 angeordnet. Eine erste Innenkante 183 des dritten Statorsektors 113 ist an einer ersten Innenkante 193 des vierten Statorsektors 114 angeordnet. Eine zweite Innenkante 184 des dritten Statorsektors 113 ist an einer zweiten Innenkante 164 des ersten Statorsektors 110 angeordnet.

Bei dem Statormodul 10 liegen die ersten Innenkanten 163, 173, 183, 193 der Statorsektoren 110, 112, 113, 114 jeweils auf einer ersten Linie und die zweiten Innenkanten 164, 174, 184, 194 der Statorsektoren 110, 112, 113, 114 liegen auf einer zweiten Linie. Die erste Linie verläuft senkrecht zu der zweiten Linie. Die erste Linie ist in der Mitte des Statormoduls 10 und der Statoreinheit 100 angeordnet. Insbesondere ist die erste Linie mittig zwischen der zweiten und der vierten Außenkante 22, 24 des Statormoduls 10 und der Statoreinheit 100 angeordnet. Die zweite Linie ist ebenfalls in der Mitte des Statormoduls 10 und der Statoreinheit 100 angeordnet. Insbesondere ist die zweite Linie mittig zwischen der ersten und der dritten Außenkante 21, 23 des Statormoduls 10 und der Statoreinheit 100 angeordnet. Die erste Linie bildet eine entlang der zweiten Richtung 14 orientierte erste Mittellinie der Statoreinheit 100 und die zweite Linie bildet eine entlang der ersten Richtung 12 orientierte zweite Mittellinie der Statoreinheit 100.

Innerhalb der Statorsektoren 110, 112, 113, 114 sind die Leiterstreifen 125 in mehreren übereinanderliegenden Statorlagen oder Statorebenen angeordnet, wobei jede der Statorlagen lediglich Leiterstreifen 125 aufweist, die entweder entlang der ersten Richtung 12 oder entlang der zweiten Richtung 14 ausgedehnt sind. Hinsichtlich der Orientierung und Anordnung der Leiterstreifen 125 und hinsichtlich der Statorlagen sind die Statorsektoren 110, 112, 113, 114 im Wesentlichen identisch aufgebaut.

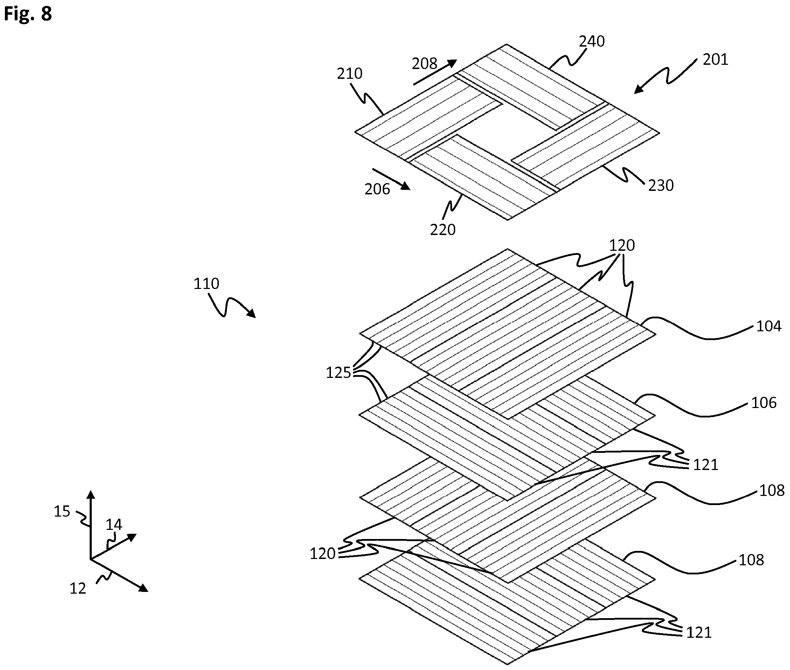

**Fig. 8** zeigt eine Explosionsansicht des ersten Statorsektors 110 mit vier übereinanderliegenden Statorlagen. Soweit keine Unterschiede beschrieben werden, sind der zweite, dritte und vierte Statorsektor 112, 113, 114 identisch zum ersten Statorsektor 110 aufgebaut. Der erste Statorsektor 110 weist eine erste Statorlage 104, eine unter der ersten Statorlage 104 angeordnete zweite Statorlage 106 und zwei unter der zweiten Statorlage 106 angeordnete weitere Statorlagen 108 auf. Die erste Statorlage 104 umfasst lediglich Leiterstreifen 125, die entlang der ersten Richtung 12 nebeneinander angeordnet und entlang der zweiten Richtung 14 länglich ausgedehnt sind. Die zweite Statorlage 106 umfasst lediglich Leiterstreifen 125, die entlang der zweiten Richtung 14 nebeneinander angeordnet und entlang der ersten Richtung 12 länglich ausgedehnt sind.

Insgesamt umfasst der erste Statorsektor 110 abwechselnd Statorlagen 104, 108, die lediglich entlang der zweiten Richtung 14 ausgedehnte längliche Leiterstreifen 125 aufweisen, und Statorlagen 106, 108, die lediglich entlang der ersten Richtung 12 ausgedehnte längliche Leiterstreifen 125 aufweisen. Insbesondere umfasst eine unter der zweiten Statorlage 106 angeordnete erste der weiteren Statorlagen 108 lediglich Leiterstreifen 125, die entlang der zweiten Richtung 14 ausgedehnt sind, und eine unter der ersten der weiteren Statorlagen 108 angeordnete zweite der weiteren Statorlagen 108 umfasst lediglich Leiterstreifen 125, die entlang der ersten Richtung 12 ausgedehnt sind.

Bei alternativen Ausführungsformen des Statormoduls 10 kann der erste Statorsektor 110 unter den in Fig. 8 dargestellten Statorlagen 104, 106, 108 weitere Statorlagen umfassen. Der erste Statorsektor 110 kann dabei jeweils abwechselnd Statorlagen mit Leiterstreifen 125, die ausschließlich entlang der ersten Richtung 12 ausgedehnt sind, und Statorlagen mit Leiterstreifen 125, die ausschließlich entlang der zweiten Richtung 14 orientiert sind, umfassen.

Die Leiterstreifen 125 des ersten Statorsektors 110 sind innerhalb der Statorlagen 104, 106, 108 jeweils zu Statorsegmenten 120, 121 zusammengefasst. Der erste Statorsektor 110 umfasst in jeder Statorlage 104, 106, 108 jeweils drei nebeneinander und aneinander anschließend angeordnete Statorsegmente 120, 121. Jedes der Statorsegmente 120, 121 umfasst jeweils sechs nebeneinander angeordnete Leiterstreifen 125. Der erste Statorsektor 110 umfasst in der ersten Statorlage 104 drei erste Statorsegmente 120 und in der zweiten Statorlage 106 drei zweite Statorsegmente 121. Die ersten Statorsegmente 120 umfassen jeweils sechs nebeneinanderliegende der entlang der ersten Richtung 12 nebeneinander angeordneten und entlang der zweiten Richtung 14 ausgedehnten länglichen Leiterstreifen 125. Die zweiten Statorsegmente 121 umfassen jeweils sechs nebeneinanderliegende der entlang der zweiten Richtung 14 nebeneinander angeordneten und entlang der ersten Richtung 12 ausgedehnten länglichen Leiterstreifen 125. In den weiteren Statorlagen 108 umfasst der erste Statorsektor 110 jeweils abwechselnd jeweils drei erste Statorsegmente 120 oder jeweils drei zweite Statorsegmente 121.

Der erste Statorsektor 110 der Statoreinheit 100 umfasst damit in der ersten Statorlage 104 und in der ersten der weiteren Statorlagen 108 ausschließlich Leiterstreifen 125, die entlang der zweiten Richtung 14 verlaufen, und in der zweiten Statorlage 106 und in der zweiten der weiteren Statorlage 108 ausschließlich Leiterstreifen 125, die entlang der ersten Richtung 12 verlaufen.

Die ersten und zweiten Statorsegmente 120, 121 weisen, abgesehen von ihrer Orientierung, identische Abmessungen auf. Insbesondere entsprechen die Abmessungen der ersten Statorsegmente 120 in der ersten Richtung 12 den Abmessungen der zweiten Statorsegmente 121 in der zweiten Richtung 14 und die Abmessungen der ersten Statorsegmente 120 in der zweiten Richtung 14 entsprechen den Abmessungen der zweiten Statorsegmente 121 in der ersten Richtung 12.

Die Statorsegmente 120, 121 sind derart übereinanderliegend angeordnet, dass sich jeweils jedes der ersten Statorsegmente 120 der ersten und der ersten weiteren Statorlage 104, 108 des ersten Statorsektors 110 in der zweiten Richtung 14 über die drei nebeneinander angeordneten zweiten Statorsegmente 121 der zweiten und der zweiten weiteren Statorlage 106, 108 des ersten Statorsektors 110 erstreckt. Außerdem erstrecken sich die zweiten Statorsegmente 121 der zweiten und zweiten weiteren Statorlage 106, 108 des ersten Statorsektors 110 in der ersten Richtung 12 über alle nebeneinander angeordneten ersten Statorsegmente 120 der ersten und ersten weiteren Statorlage 104, 108 des ersten Statorsektors 110.

Im Betrieb des Planarantriebssystems 1 kann der Läufer 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Die erste Magneteinheit 210 und die dritte Magneteinheit 230 können im Betrieb mit dem durch die Leiterstreifen 125 der ersten Statorsegmente 120 erzeugten Magnetfeld wechselwirken, um einen Antrieb des Läufers 200 entlang der ersten Richtung 12 zu erzeugen. Die zweite Magneteinheit 220 und die vierte Magneteinheit 240 können im Betrieb mit dem durch die Leiterstreifen 125 der zweiten Statorsegmente 121 erzeugten Magnetfeld wechselwirken, um einen Antrieb des Läufers 200 entlang der zweiten Richtung 14 zu erzeugen.

Alternativ kann der Läufer 200, anders als in Fig. 8 dargestellt, auch derart ausgerichtet sein, dass die erste Läuferrichtung 206 entlang der zweiten Richtung 14 und die zweite Läuferrichtung 208 entlang der ersten Richtung 12 orientiert ist. In diesem Fall wirken die erste und die dritte Magneteinheit 210, 230 mit dem Magnetfeld der zweiten Statorsegmente 121 für einen Antrieb des Läufers 200 in die zweite Richtung 14 und die zweite und die vierte Magneteinheit 220, 240 mit dem Magnetfeld der ersten Statorsegmente 120 für einen Antrieb des Läufers 200 in die erste Richtung 12 zusammen.

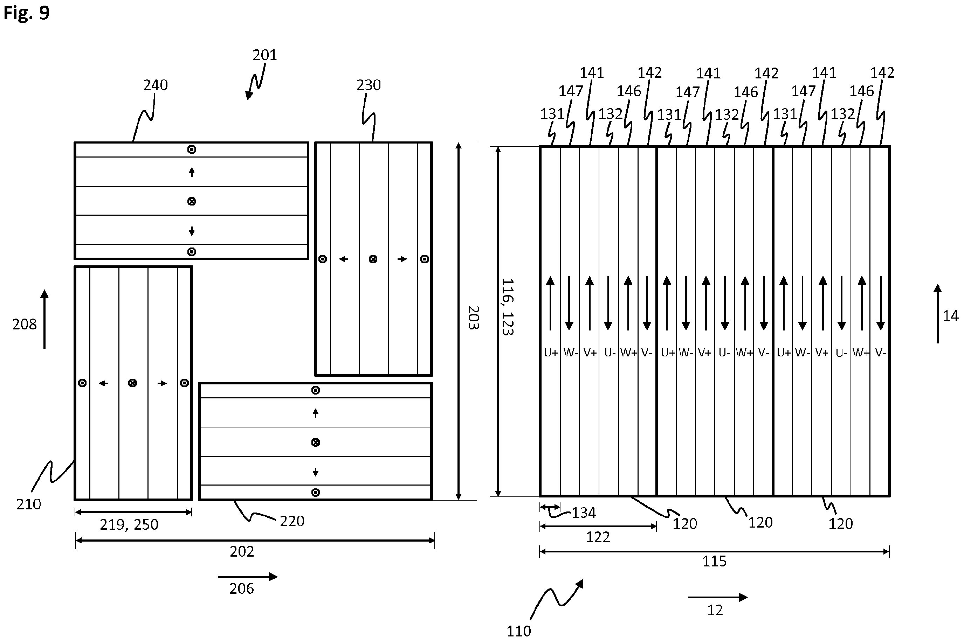

**Fig. 9** zeigt Aufsichten auf die Magnetanordnung 201 und auf die ersten Statorsegmente 120 des ersten Statorsektors 110. Soweit keine Unterschiede beschrieben werden, sind der zweite, dritte und vierte Statorsektor 112, 113, 114 identisch zu dem ersten Statorsektor 110 aufgebaut.

Die ersten Statorsegmente 120 weisen in der ersten Richtung 12 eine Segmentbreite 122 auf, die der Magnetisierungsperiode 219 und der Breite 250 der ersten und der dritten Magneteinheit 210, 230 der Magnetanordnung 201 des Läufers 200 entspricht. Die ersten Statorsegmente 120 weisen in der zweiten Richtung 14 eine Segmentlänge 123 auf, die dem Dreifachen der Magnetisierungsperiode 219 und dem Dreifachen der Breite 250 der ersten und dritten Magneteinheit 210, 230 entspricht. Eine Leiterperiode 134 der Leiterstreifen 125 der ersten Statorsegmente 120 des ersten Statorsektors 110 entspricht einem Sechstel der Magnetisierungsperiode 219 der ersten und dritten Magneteinheit 210, 230. Die Leiterperiode 134 der Leiterstreifen 125 umfasst eine Breite der Leiterstreifen 125 selbst, also die Breite der Metallisierungsflächen der Leiterstreifen 125, und eine Breite eines zwischen benachbarten Leiterstreifen 125 zur elektrischen Isolierung vorgesehenen Zwischenraums. Damit bezeichnet die Leiterperiode 134 der Leiterstreifen 125 der ersten Statorsegmente 120 den Abstand der entlang der zweiten Richtung 14 orientierten Mittellinien benachbarter Leiterstreifen 125.

Nachdem der erste Statorsektor 110 in den die ersten Statorsegmente 120 umfassenden Statorlagen 104, 108 aus drei in der ersten Richtung 12 nebeneinander angeordneten ersten Statorsegmenten 120 besteht, weist der erste Statorsektor 110 in der ersten Richtung 12 eine Sektorbreite 115 auf, die dem Dreifachen der Magnetisierungsperiode 219 der ersten und dritten Magneteinheit 210, 230 entspricht. Der erste Statorsektor 110 weist in der zweiten Richtung 14 eine Sektorlänge 116 auf, die der Sektorbreite 115 bzw. dem Dreifachen der Magnetisierungsperiode 219 der ersten und dritten Magneteinheit 210, 230 entspricht.

Die Sektorbreite 115 des ersten Statorsektors 110 in der ersten Richtung 12 ist somit kleiner als die Breite 202 der Magnetanordnung 201 in der ersten Läuferrichtung 206 und kleiner als die Länge 203 der Magnetanordnung 201 in der zweiten Läuferrichtung 208. Die Sektorlänge 116 in der zweiten Richtung 14 ist somit kleiner als die Länge 203 der Magnetanordnung 201 in der zweiten Läuferrichtung 208 und kleiner als die Breite 202 der Magnetanordnung 201 in der ersten Läuferrichtung 206. Die Breite 202 und die Länge 203 der Magnetanordnung 201 ist jeweils um die Breite 256 des Zwischenraums 254 größer als die Sektorbreite 115 und die Sektorlänge 116. Beispielsweise ist die Breite 202 und die Länge 203 der Magnetanordnung 201 jeweils um ein Zwölftel der Magnetisierungsperiode 219 größer als die Sektorbreite 115 und die Sektorlänge 116.

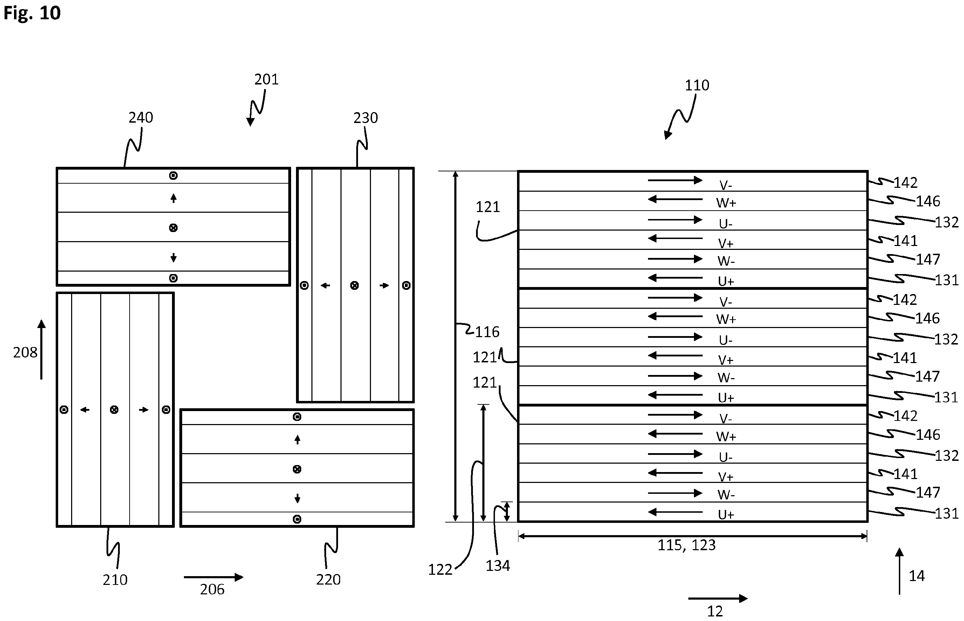

**Fig. 10** zeigt Aufsichten auf die Magnetanordnung 201 und auf die zweiten Statorsegmente 121 des ersten Statorsektors 110. Soweit keine Unterschiede beschrieben werden, sind der zweite, dritte und vierte Statorsektor 112, 113, 114 identisch zum ersten Statorsektor 110 aufgebaut.

Die zweiten Statorsegmente 121 weisen in der zweiten Richtung 14 eine Segmentbreite 122 auf, die der Magnetisierungsperiode 219 und der Breite 250 der zweiten und der vierten Magneteinheit 220, 240 der Magnetanordnung 201 des Läufers 200 entspricht. Die zweiten Statorsegmente 121 weisen in der ersten Richtung 12 eine Segmentlänge 123 auf, die dem Dreifachen der Magnetisierungsperiode 219 und dem Dreifachen der Breite 250 der zweiten und vierten Magneteinheit 220, 240 entspricht. Eine Leiterperiode 134 der Leiterstreifen 125 der zweiten Statorsegmente 121 des ersten Statorsektors 110 entspricht einem Sechstel der Magnetisierungsperiode 219 der zweiten und vierten Magneteinheit 220, 240. Die Leiterperiode 134 der Leiterstreifen 125 umfasst eine Breite der Leiterstreifen 125 selbst, also die Breite der Metallisierungsflächen der Leiterstreifen 125, und eine Breite eines zwischen benachbarten Leiterstreifen 125 zur elektrischen Isolierung vorgesehenen Zwischenraums. Damit bezeichnet die Leiterperiode 134 der Leiterstreifen 125 der zweiten Statorsegmente 121 den Abstand der entlang der ersten Richtung 12 orientierten Mittellinien benachbarter Leiterstreifen 125.

Die Sektorbreite 115 des ersten Statorsektors 110 in der ersten Richtung 12 entspricht dem Dreifachen der Magnetisierungsperiode 219 der zweiten und vierten Magneteinheit 220, 240. Die Sektorlänge 116 des ersten Statorsektors 110 in der zweiten Richtung 14 entspricht der Sektorbreite 115 und dem Dreifachen der Magnetisierungsperiode 219 der zweiten und vierten Magneteinheit 220, 240.

Die Leiterstreifen 125 jedes der einzelnen Statorsegmente 120, 121 sind jeweils unabhängig von den Leiterstreifen 125 der übrigen Statorsegmente 120, 121 mit den Antriebsströmen bestrombar. Insbesondere hängen die Antriebsströme in einem der Statorsegmente 120, 121 nicht zwingend von Antriebsströmen in einem anderen der Statorsegmente 120, 121 ab. Außerdem können die Leiterstreifen 125 eines der Statorsegmente 120, 121 mit Antriebsströmen beaufschlagt werden, während die Leiterstreifen 125 eines anderen, beispielsweise eines benachbarten, Statorsegments 120, 121 stromlos sind. Die Leiterstreifen 125 unterschiedlicher Statorsegmente 120, 121 können beispielsweise aus jeweils separaten Leistungsmodulen oder aus separaten Stromerzeugungseinheiten bzw. Endstufen eines Leistungsmoduls des Statormoduls 10 mit den Antriebsströmen beaufschlagt werden.

Die Leiterstreifen 125 der einzelnen Statorsegmente 120, 121 sind jeweils zu unabhängig voneinander bestrombaren Mehrphasensystemen verschaltet. Insbesondere sind die Leiterstreifen 125 der Statorsegmente 120, 121 jeweils zu einem Dreiphasensystem verschaltet und die Leiterstreifen 125 werden mit einem dreiphasigen Antriebsstrom beaufschlagt. Dabei weisen eine erste Phase U, eine zweite Phase V und eine dritte Phase W der Antriebsströme untereinander jeweils einen Phasenversatz von 120° auf.

In den Fig. 9 und 10 ist die Verteilung der Phasen U, V, W auf die Leiterstreifen 125 der ersten und zweiten Statorsegmente 120, 121 dargestellt. Die Statorsegmente 120, 121 weisen jeweils einen ersten Hinleiter 131 und einen ersten Rückleiter 132 für die ersten Phasen U der Antriebsströme, einen zweiten Hinleiter 141 und einen zweiten Rückleiter 142 für die zweiten Phasen V der Antriebsströme und einen dritten Hinleiter 146 und einen dritten Rückleiter 147 für die dritten Phasen W der Antriebsströme auf. Nachdem die einzelnen Statorsegmente 120, 121 jeweils unabhängig voneinander bestrombar sind, können die Antriebsströme, mit denen die einzelnen Statorsegmente 120, 121 beaufschlagt werden, verschieden sein. Insbesondere können jeweils die einzelnen ersten Phasen U, mit denen die verschiedenen Statorsegmente 120, 121 beaufschlagt werden, verschieden sein. Außerdem können jeweils die einzelnen zweiten Phasen V, mit denen die verschiedenen Statorsegmente 120, 121 beaufschlagt werden, und die einzelnen dritten Phasen W, mit denen die verschiedenen Statorsegmente 120, 121 beaufschlagt werden, verschieden sein.

Die Hinleiter 131, 141, 146 und die Rückleiter 132, 142, 147 eines der Statorsegmente 120, 121 sind jeweils entlang einer Breitenrichtung der Statorsegmente 120, 121 nebeneinander angeordnet. Bei den in Fig. 9 dargestellten ersten Statorsegmenten 120 entspricht die Breitenrichtung der ersten Richtung 12. Bei den in Fig. 10 dargestellten zweiten Statorsegmenten 121 entspricht die Breitenrichtung der zweiten Richtung 14.

Der erste Hinleiter 131 ist jeweils an einer ersten Längsseite der Statorsegmente 120, 121 angeordnet. Bei den ersten Statorsegmenten 120 ist die erste Längsseite entlang der zweiten Richtung 14 und bei den zweiten Statorsegmenten 121 entlang der ersten Richtung 12 orientiert. Dem ersten Hinleiter 131 nachfolgend sind bei den Statorsegmenten 120, 121 in der Breitenrichtung der Reihe nach der dritte Rückleiter 147, der zweite Hinleiter 141, der erste Rückleiter 132, der dritte Hinleiter 146 und der zweite Rückleiter 142 nebeneinander und aneinander anschließend angeordnet.

Die erste Phase U wird bei den Statorsegmenten 120, 121 auf dem ersten Hinleiter 131 von einer ersten Seite der Statorsegmente 120, 121 zu einer der ersten Seite gegenüberliegenden zweiten Seite der Statorsegmente 120, 121 und auf dem ersten Rückleiter 132 von der zweiten Seite zu der ersten Seite geleitet. Die zweite Phase V wird auf dem zweiten Hinleiter 141 von der ersten Seite der Statorsegmente 120, 121 zu der zweiten Seite der Statorsegmente 120, 121 und auf dem zweiten Rückleiter 142 von der zweiten Seite zu der ersten Seite geleitet. Die dritte Phase W wird auf dem dritten Hinleiter 146 von der ersten Seite der Statorsegmente 120, 121 zu der zweiten Seite der Statorsegmente 120 und auf dem dritten Rückleiter 147 von der zweiten Seite zu der ersten Seite geleitet.

Die Phasen U, V und W werden damit jeweils an der ersten Seite der Statorsegmente 120, 121 auf die Hinleiter 131, 141, 146 und auf der zweiten Seite der Statorsegmente 120, 121 auf die Rückleiter 132, 142, 147 eingespeist. Außerdem werden die Phasen U, V und W jeweils an der zweiten Seite der Statorsegmente 120, 121 aus den Hinleitern 131, 141, 146 und auf der ersten Seite der Statorsegmente 120, 121 aus den Rückleitern 132, 142, 147 ausgekoppelt.

Bei den ersten Statorsegmenten 120 sind die erste und die zweite Seite jeweils parallel zu der ersten Richtung 12 ausgerichtet. Bei den zweiten Statorsegmenten 121 sind die erste und die zweite Seite jeweils parallel zu der zweiten Richtung 14 ausgerichtet.

Die Leiterstreifen 125 der Hinleiter 131, 141, 145 der einzelnen Phasen U, V, W sind jeweils um eine halbe Magnetisierungsperiode 219 zueinander verschoben angeordnet. Die Leiterstreifen 125 der Rückleiter 132, 142, 146 der einzelnen Phasen U, V, W sind jeweils um eine halbe Magnetisierungsperiode 219 zueinander verschoben angeordnet. Der Leiterstreifen 125 des Hinleiters 131 der ersten Phase U ist um ein Drittel der Magnetisierungsperiode 219 verschoben zu dem Leiterstreifen 125 des Rückleiters 132 der ersten Phase U angeordnet. Der Leiterstreifen 125 des Hinleiters 141 der zweiten Phase V ist um ein Drittel der Magnetisierungsperiode 219 verschoben zu dem Leiterstreifen 125 des Rückleiters 142 der zweiten Phase V angeordnet. Der Leiterstreifen 125 des Hinleiters 145 der dritten Phase W ist um ein Drittel der Magnetisierungsperiode 219 verschoben zu dem Leiterstreifen 125 des Rückleiters 146 der dritten Phase W verschoben angeordnet. Mittels der drei Phasen U, V, W des Antriebsstroms kann in den Leiterstreifen 125 ein magnetisches Wanderfeld oberhalb der Statorfläche 11 erzeugt werden kann.

Die ersten Hin- und Rückleiter 131, 132 von auf mehreren Statorlagen 104, 106, 108 übereinanderliegenden ersten Statorsegmenten 120 können jeweils seriell verschaltet sein. Analog können die zweiten Hin- und Rückleiter 141, 142 und die dritten Hin- und Rückleiter 146, 147 von auf mehreren Statorlagen 104, 106, 108 übereinanderliegenden ersten Statorsegmenten 120 jeweils seriell verschaltet sein. Insbesondere können die Phasen U, V, W jeweils auf einer der Statorlagen 104, 106, 108 in die Hinleiter 131, 141, 146 eines der ersten Statorsegmente 120 eingekoppelt werden, anschließend jeweils alle der betreffenden Phase U, V, W zugeordneten Hin- und Rückleiter 131, 141, 146, 132, 142, 147 auf allen Statorlagen 104, 106, 108 des betreffenden ersten Statorsegments 120 durchlaufen und schließlich auf einer der Statorlagen 104, 106, 108 in einem Sternpunkt zusammengeführt werden. Analog zu den ersten Statorsegmenten 120 können auch jeweils die ersten Hin- und Rückleiter 131, 132, die zweiten Hin- und Rückleiter 141, 142 und die dritten Hin- und Rückleiter 146, 147 von auf mehreren Statorlagen 104, 106, 108 übereinanderliegenden zweiten Statorsegmenten 121 seriell verschaltet sein.

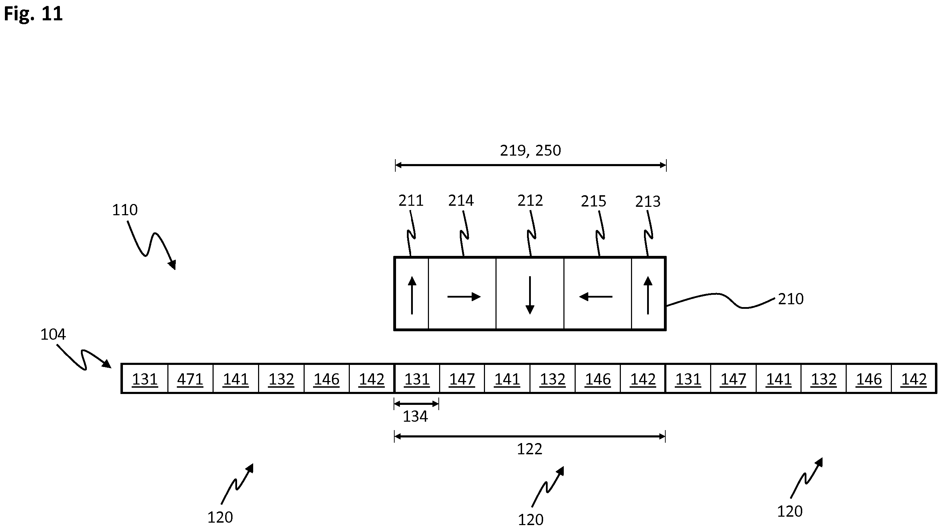

**Fig. 11** zeigt in einer Seitenansicht die erste Magneteinheit 210 und die ersten Statorsegmente 120 der ersten Statorlage 104 des ersten Statorsektors 110. Soweit keine Unterschiede beschrieben werden, sind die zweite, dritte und vierte Magneteinheit 220, 230, 240, die zweite und die weiteren Statorlagen 106, 108, die zweiten Statorsegmente 121 sowie der zweite, dritte und vierte Statorsektor 112, 113, 114 analog aufgebaut und angeordnet.

Die Breite 250 der ersten Magneteinheit 210 und die Segmentbreite 122 der ersten Statorsegmente 120 entsprechen der Magnetisierungsperiode 219 der ersten Magneteinheit 210. Mittels der Antriebsströme in den die Hin- und Rückleiter 131, 141, 146, 132, 142, 147 umfassenden Dreiphasensystemen der ersten Statorsegmente 120 wird oberhalb der Statorfläche ein magnetisches Wanderfeld mit einem näherungsweise harmonischen Verlauf erzeugt. Die Magnete 211, 212, 213, 214, 215 der ersten Magneteinheit 210 richten sich in dem erzeugten Wanderfeld aus. Bei einer Propagation des Wanderfeldes entlang der ersten Statorsegmente 120 folgen die Magnete 211, 212, 213, 214, 215 der ersten Magneteinheit 210 dem Wanderfeld und es wird eine Antriebskraft auf den Läufer 200 ausgeübt.

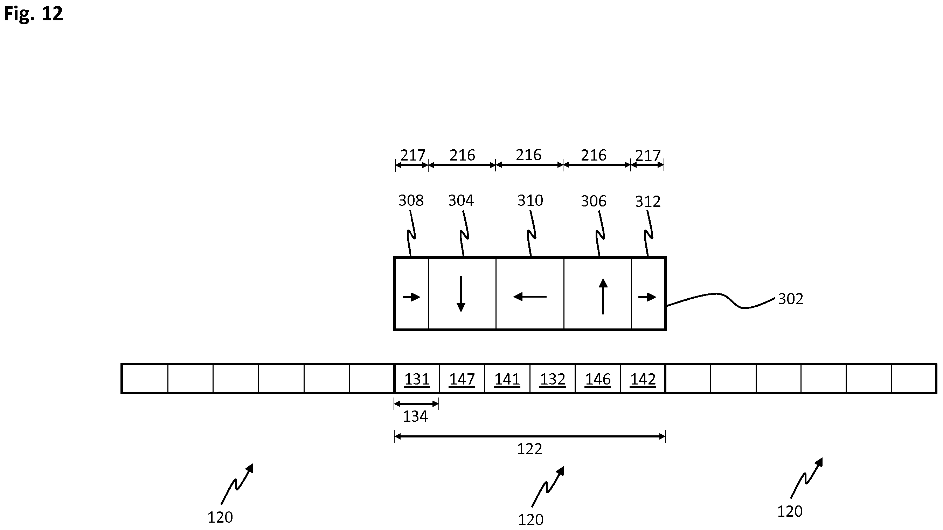

**Fig. 12** zeigt in einer Seitenansicht eine weitere Magneteinheit 302 und drei der ersten Statorsegmente 120. Die weitere Magneteinheit 302 kann anstelle der ersten und dritten Magneteinheit 210, 230 der Magnetanordnung 201 und/oder anstelle der zweiten und vierten Magneteinheit 220, 240 der Magnetanordnung 201 eingesetzt werden. Soweit im Folgenden keine Unterschiede beschrieben werden, entspricht die weitere Magnetanordnung hinsichtlich ihrer Abmessungen und ihrer Ausrichtung der ersten und dritten Magnetanordnung 210, 230 und/oder der zweiten und vierten Magnetanordnung 220, 240.

Die weitere Magnetanordnung 302 weist in Bezug auf die in Fig. 4 dargestellte erste Magneteinheit 210 anstelle des ersten Antriebsmagneten 211 einen ersten Kompensationsmagneten 308, anstelle des ersten Kompensationsmagneten 214 einen ersten Antriebsmagneten 304, anstelle des zweiten Antriebsmagneten einen zweiten Kompensationsmagneten 310, anstelle des zweiten Kompensationsmagneten 215 einen zweiten Antriebsmagneten 306 und anstelle des dritten Antriebsmagneten 213 einen dritten Kompensationsmagneten 312 auf.

Der erste Antriebsmagnet 304 weist eine Magnetisierung auf, die von der Oberseite des Läufers 200 zu der Unterseite des Läufers 200 orientiert ist. Der zweite Antriebsmagnet 306 weist eine Magnetisierung auf, die von der Unterseite des Läufers 200 zu der Oberseite des Läufers 200 orientiert ist. Der erste Kompensationsmagnet 308 weist eine Magnetisierung auf, die in Richtung des ersten Antriebsmagnets 304 orientiert ist. Der zweite Kompensationsmagnet 310 weist eine Magnetisierung auf, die von dem zweiten Antriebsmagneten 306 in Richtung des ersten Antriebsmagneten 304 orientiert ist. Der dritte Kompensationsmagnet 312 weist eine Magnetisierung auf, die in Richtung des zweiten Antriebsmagneten 306 orientiert ist.

Eine Magnetisierungsperiode der weiteren Magneteinheit 302 entspricht der Magnetisierungsperiode 219 der Magneteinheiten 210, 220, 230, 240, wobei die Magnetisierung der Magneten 308, 304, 310, 306, 312 der weiteren Magneteinheit 302 gegenüber der Magnetisierung der Magneten 211, 214, 212, 215, 213 der Magneteinheiten 210, 220, 230, 240 um eine erste Magnetbreite 216 bzw. um ein Viertel der Magnetisierungsperiode 219 verschoben ist. Der Läufer 200 kann anstelle der ersten und der dritten Magneteinheit 210, 230 jeweils die weitere Magneteinheit 302 umfassen. Alternativ oder zusätzlich kann der Läufer 200 anstelle der zweiten und der vierten Magneteinheit 220, 240 jeweils die weitere Magneteinheit 302 umfassen. Ein derart ausgebildeter Läufer kann mittels eines durch die Antriebsströme in den ersten Statorsegmenten 120 erzeugten Wanderfeldes analog zu der im Zusammenhang mit Fig. 11 beschriebenen Art und Weise angetrieben werden.

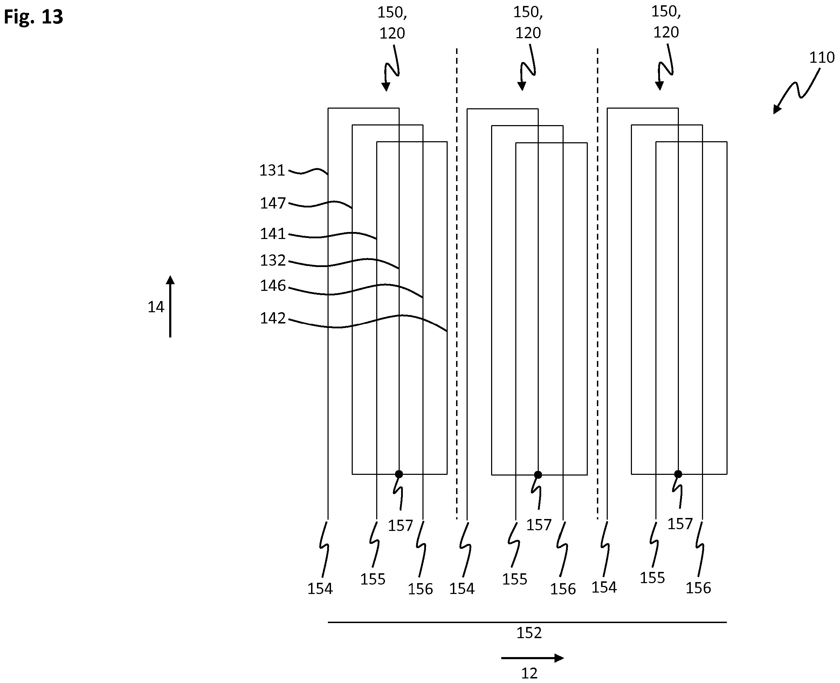

**Fig. 13** zeigt ein Ersatzschaltbild der ersten Statorsegmente 120 des ersten Statorsektors 110. Bei dem in Fig. 13 dargestellten Ersatzschaltbild sind alle übereinanderliegenden und in Serie geschalteten Leiterstreifen 125 der ersten Statorsegmente 120 als ein einziger Leiter dargestellt. Insbesondere umfasst der dargestellte erste Hinleiter 131 alle in verschiedenen Statorlagen 104, 108 übereinanderliegenden und in Serie geschalteten Hinleiter 131 der ersten Statorsegmente 120 und der dargestellte erste Rückleiter 132 umfasst alle in verschiedenen Statorlagen 104, 108 übereinanderliegenden und in Serie geschalteten ersten Rückleiter 132 der ersten Statorsegmente 120. Analog umfassen die dargestellten zweiten Hinleiter 141, zweiten Rückleiter 142, dritten Hinleiter 146 und dritten Rückleiter 147 jeweils alle in verschiedenen Statorlagen 104, 108 übereinanderliegenden und in Serie geschalteten zweiten Hinleiter 141, zweiten Rückleiter 142, dritten Hinleiter 146 bzw. dritten Rückleiter 147 der ersten Statorsegmente 120.

Die Leiterstreifen 125, bzw. die Hin- und Rückleiter 131, 132, 141, 142, 146, 147 der einzelnen ersten Statorsegmente 110 sind jeweils zu ersten Dreiphasensystemen 150 verschaltet. An einer entlang der ersten Richtung 12 orientierten ersten Seite 152 der einzelnen ersten Statorsegmente 120 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 ist mit einem in einer der Statorlagen 104, 108 angeordneten ersten Hinleiter 131 verbunden. Der zweite Anschlusspunkt 155 ist mit einem in einer der Statorlagen 104, 108 angeordneten zweiten Hinleiter 141 verbunden. Der dritte Anschlusspunkt 156 ist mit einem in einer der Statorlagen 104, 108 angeordneten dritten Hinleiter 146 verbunden. Außerdem ist an der ersten Seite 152 der einzelnen ersten Statorsegmente 120 jeweils ein Sternpunkt 157 angeordnet. In den Sternpunkten 157 sind jeweils ein erster Rückleiter 132 einer der Statorlagen 104, 108, ein zweiter Rückleiter 142 einer der Statorlagen 104, 108 und ein dritter Rückleiter 147 einer der Statorlagen 104, 108 miteinander verbunden.

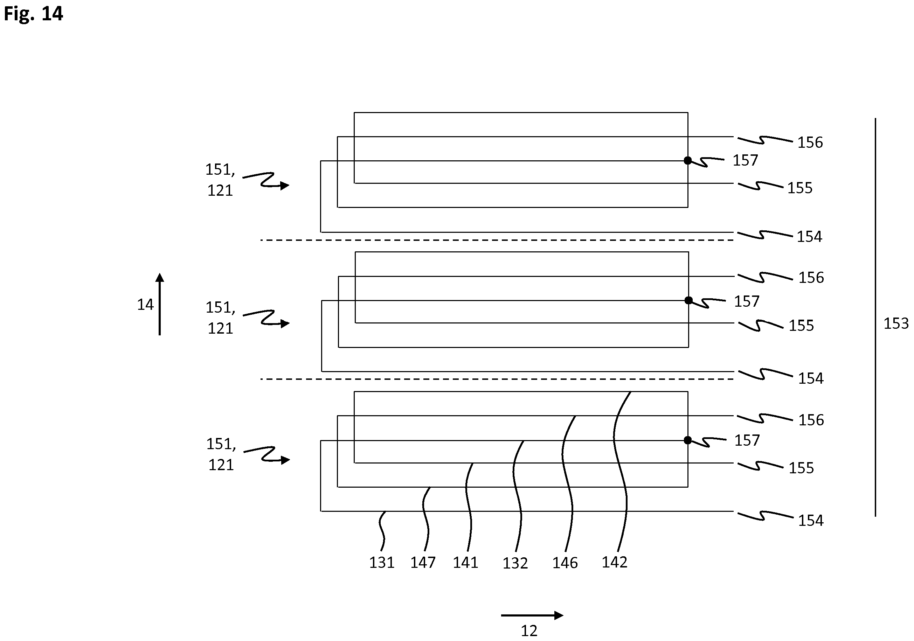

**Fig. 14** zeigt ein Ersatzschaltbild der zweiten Statorsegmente 121 des ersten Statorsektors 110. Bei dem in Fig. 14 dargestellten Ersatzschaltbild sind, wie bei dem in Fig. 13 dargestellten Ersatzschaltbild der ersten Statorsegmente 120, alle übereinanderliegenden und in Serie geschalteten Leiterstreifen 125 der zweiten Statorsegmente 121 als ein einziger Leiter dargestellt.

Die Leiterstreifen 125, bzw. die Hin- und Rückleiter 131, 132, 141, 142, 146, 147 der zweiten Statorsegmente 121 sind jeweils zu zweiten Dreiphasensystemen 151 verschaltet. An einer entlang der zweiten Richtung 14 orientierten ersten Seite 153 der zweiten Statorsegmente 121 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 ist mit einem in einer der Statorlagen 106, 108 angeordneten ersten Hinleiter 131 verbunden. Der zweite Anschlusspunkt 155 ist mit einem in einer der Statorlagen 106, 108 angeordneten zweiten Hinleiter 141 verbunden. Der dritte Anschlusspunkt 156 ist mit einem in einer der Statorlagen 106, 108 angeordneten dritten Hinleiter 146 verbunden. Außerdem ist an der ersten Seite 153 der einzelnen zweiten Statorsegmente 121 jeweils ein Sternpunkt 157 angeordnet. In den Sternpunkten 157 sind jeweils ein erster Rückleiter 132 einer der Statorlagen 106, 108, ein zweiter Rückleiter 142 einer der Statorlagen 106, 108 und ein dritter Rückleiter 147 einer der Statorlagen 106, 108 miteinander verbunden.

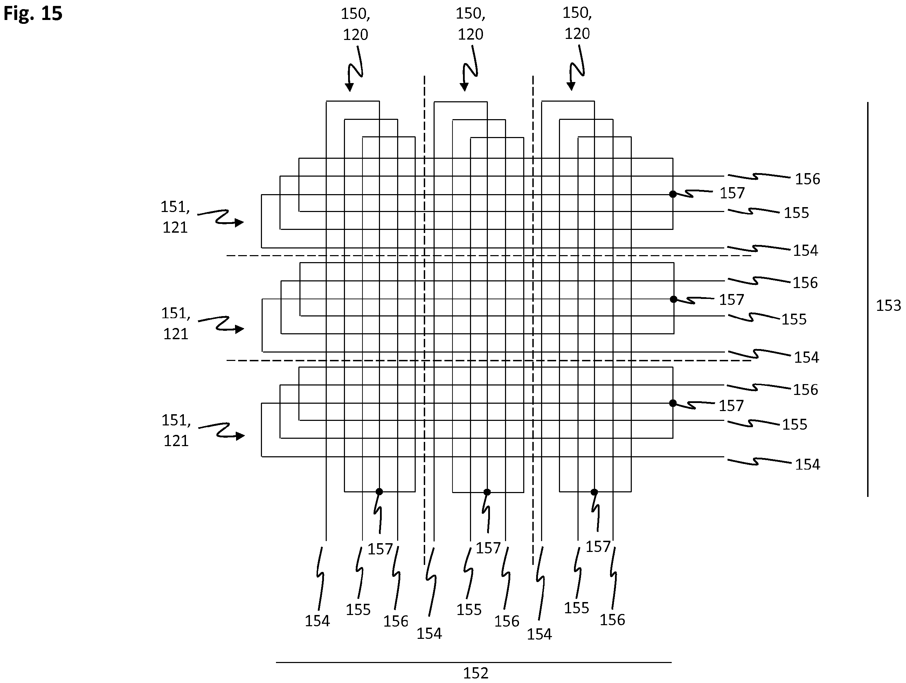

**Fig. 15** zeigt ein Ersatzschaltbild des ersten Statorsektors 110 mit den zu Fig. 13 beschriebenen und die ersten Statorsegmente 120 repräsentierenden ersten Dreiphasensystemen 150 und den zu Fig. 14 beschriebenen und die zweiten Statorsegmente 121 repräsentierenden zweiten Dreiphasensystemen 151. Die ersten Dreiphasensysteme 150 und die zweiten Dreiphasensysteme 151 sind um 90° gegeneinander verdreht angeordnet. Insbesondere sind die erste Seite 152 der ersten Statorsegmente 120 und die erste Seite 153 der zweiten Statorsegmente 121 senkrecht zueinander angeordnet.

Ein Vergleich der Darstellungen des ersten Statorsektors 110 in Fig. 15 und Fig. 7 zeigt, dass die entlang der ersten Seite 152 der ersten Statorsegmente 120 angeordneten Anschlusspunkte 154, 155, 156 der ersten Statorsegmente 120 entlang der zweiten Innenkante 164 des ersten Statorsektors 110 angeordnet sind. Außerdem sind die entlang der ersten Seite 153 der zweiten Statorsegmente 121 angeordneten Anschlusspunkte 154, 155, 156 der zweiten Statorsegmente 121 entlang der ersten Innenkante 163 des ersten Statorsektors 110 angeordnet. Insbesondere sind die Anschlusspunkte 154, 155, 156 der ersten Statorsegmente 120 des ersten Statorsektors 110 auf der zweiten Innenkante 164 des ersten Statorsektors 110 und die Anschlusspunkte 154, 155, 156 der zweiten Statorsegmente 121 des ersten Statorsektors 110 auf der ersten Innenkante 163 des ersten Statorsektors 110 angeordnet.

Die Sternpunkte 157 der ersten Statorsegmente 120 sind an der zweiten Innenkante 164 des ersten Statorsektors 110 und die Sternpunkte 157 der zweiten Statorsegmente 121 sind an der ersten Innenkante 163 des ersten Statorsektors 110 angeordnet.

Soweit im Folgenden keine Unterschiede beschrieben werden, entsprechen die Ersatzschaltbilder des zweiten Statorsektors 112, des dritten Statorsektors 113 und des vierten Statorsektors 114 jeweils dem in Fig. 15 dargestellten Ersatzschaltbild des ersten Statorsektors 110.

Die erste Seite 152 der ersten Statorsegmente 120 des zweiten Statorsektors 112 ist entlang der zweiten Innenkante 174 des zweiten Statorsektors 112 angeordnet. Außerdem ist die erste Seite 153 der zweiten Statorsegmente 121 des zweiten Statorsektors 112 entlang der ersten Innenkante 173 des zweiten Statorsektors 112 angeordnet. Insbesondere sind die Anschlusspunkte 154, 155, 156 der ersten Statorsegmente 120 des zweiten Statorsektors 112 auf der zweiten Innenkante 174 des zweiten Statorsektors 112 und die Anschlusspunkte 154, 155, 156 der zweiten Statorsegmente 121 des zweiten Statorsektors 112 auf der ersten Innenkante 173 des zweiten Statorsektors 112 angeordnet.

Die Sternpunkte 157 der ersten Statorsegmente 120 des zweiten Statorsektors 112 sind an der zweiten Innenkante 174 des zweiten Statorsektors 112 und die Sternpunkte 157 der zweiten Statorsegmente 121 des zweiten Statorsektors 112 sind an der ersten Innenkante 173 des zweiten Statorsektors 112 angeordnet.

Da die erste Innenkante 163 des ersten Statorsektors 110 der ersten Innenkante 173 des zweiten Statorsektors 112 entspricht und die zweite Innenkante 164 des ersten Statorsektors 110 fluchtend mit der zweiten Innenkante 174 des zweiten Statorsektors 112 auf der zweiten Mittellinie des Statormoduls 10 angeordnet ist, ist das Ersatzschaltbild des zweiten Statorsektors 112 gegenüber dem Ersatzschaltbild des ersten Statorsektors 110 an der ersten Innenkante 163 des ersten Statorsektors 110 bzw. an der ersten Seite 153 der zweiten Statorsegmente 121 des ersten Statorsektors 110 gespiegelt angeordnet.

Die erste Seite 152 der ersten Statorsegmente 120 des dritten Statorsektors 213 ist entlang der zweiten Innenkante 184 des dritten Statorsektors 113 angeordnet. Außerdem ist die erste Seite 153 der zweiten Statorsegmente 121 des dritten Statorsektors 113 entlang der ersten Innenkante 183 des dritten Statorsektors 113 angeordnet. Insbesondere sind die Anschlusspunkte 154, 155, 156 der ersten Statorsegmente 120 des dritten Statorsektors 113 auf der zweiten Innenkante 184 des dritten Statorsektors 113 und die Anschlusspunkte 154, 155, 156 der zweiten Statorsegmente 121 des dritten Statorsektors 113 auf der ersten Innenkante 183 des dritten Statorsektors 113 angeordnet.

Die Sternpunkte 157 der ersten Statorsegmente 120 des dritten Statorsektors 113 sind an der zweiten Innenkante 184 des dritten Statorsektors 113 und die Sternpunkte 157 der zweiten Statorsegmente 121 des dritten Statorsektors 113 sind an der ersten Innenkante 183 des dritten Statorsektors 113 angeordnet.

Da die zweite Innenkante 164 des ersten Statorsektors 110 der zweiten Innenkante 174 des dritten Statorsektors 113 entspricht und die erste Innenkante 163 des ersten Statorsektors 110 fluchtend mit der ersten Innenkante 173 des dritten Statorsektors 113 auf der ersten Mittellinie des Statormoduls 10 angeordnet ist, ist das Ersatzschaltbild des dritten Statorsektors 113 gegenüber dem Ersatzschaltbild des ersten Statorsektors 110 an der zweiten Innenkante 164 des ersten Statorsektors 110 bzw. an der ersten Seite 152 der ersten Statorsegmente 120 des ersten Statorsektors 110 gespiegelt angeordnet.

Die erste Seite 152 der ersten Statorsegmente 120 des vierten Statorsektors 114 ist entlang der zweiten Innenkante 194 des vierten Statorsektors 114 angeordnet. Außerdem ist die erste Seite 153 der zweiten Statorsegmente 121 des vierten Statorsektors 114 entlang der ersten Innenkante 193 des vierten Statorsektors 114 angeordnet. Insbesondere sind die Anschlusspunkte 154, 155, 156 der ersten Statorsegmente 120 des vierten Statorsektors 114 auf der zweiten Innenkante 194 des vierten Statorsektors 114 und die Anschlusspunkte 154, 155, 156 der zweiten Statorsegmente 121 des vierten Statorsektors 114 auf der ersten Innenkante 193 des vierten Statorsektors 114 angeordnet.

Die Sternpunkte 157 der ersten Statorsegmente 120 des vierten Statorsektors 114 sind an der zweiten Innenkante 194 des vierten Statorsektors 114 und die Sternpunkte 157 der zweiten Statorsegmente 121 des vierten Statorsektors 114 sind an der ersten Innenkante 193 des vierten Statorsektors 114 angeordnet.

Da die zweite Innenkante 174 des zweiten Statorsektors 112 der zweiten Innenkante 194 des vierten Statorsektors 114 entspricht und die erste Innenkante 173 des zweiten Statorsektors 112 fluchtend mit der ersten Innenkante 193 des vierten Statorsektors 114 auf der zweiten Mittellinie des Statormoduls 10 angeordnet ist, ist das Ersatzschaltbild des vierten Statorsektors 114 gegenüber dem Ersatzschaltbild des zweiten Statorsektors 112 an der zweiten Innenkante 174 des zweiten Statorsektors 112 bzw. an der ersten Seite 152 der ersten Statorsegmente 120 des zweiten Statorsektors 112 gespiegelt angeordnet.

Da die erste Innenkante 183 des dritten Statorsektors 113 der ersten Innenkante 193 des vierten Statorsektors 114 entspricht und die zweite Innenkante 184 des dritten Statorsektors 113 fluchtend mit der zweiten Innenkante 194 des vierten Statorsektors 114 auf der ersten Mittellinie des Statormoduls 10 angeordnet ist, ist das Ersatzschaltbild des vierten Statorsektors 114 gegenüber dem Ersatzschaltbild des dritten Statorsektors 113 an der ersten Innenkante 183 des dritten Statorsektors 113 bzw. an der ersten Seite 153 der zweiten Statorsegmente 121 des dritten Statorsektors 113 gespiegelt angeordnet.

Insgesamt liegen damit die Anschlusspunkte 154, 155, 156 der ersten Statorsegmente 120 des ersten, zweiten, dritten und vierten Statorsektors 110, 112, 113, 114 auf der zweiten Mittellinie des Statormoduls 10 und der Statoreinheit 100. Die Anschlusspunkte 154, 155, 156 der zweiten Statorsegmente 121 des ersten, zweiten, dritten und vierten Statorsektors 110, 112, 113, 114 liegen allesamt auf der ersten Mittellinie des Statormoduls 10 und der Statoreinheit 100. Die Außenkanten 21, 22, 23, 24 bzw. die Außenkanten 161, 162 des ersten Statorsektors 110, die Außenkanten 171, 172 des zweiten Statorsektors 112, die Außenkanten 181, 182 des dritten Statorsektors 113 und die Außenkanten 191, 192 des vierten Statorsektors 114 sind allesamt frei von Anschlusspunkten 154, 155, 156 der Statorsegmente 120, 121.

Die Statoreinheit 100 des Statormoduls 10 weist eine in Fig. 7 dargestellte Kontaktstruktur 102 zur Kontaktierung der ersten und zweiten Statorsegmente 120, 121 auf. Die Kontaktstruktur 102 ist kreuzförmig ausgebildet und jeweils entlang der ersten Mittellinie und der zweiten Mittellinie des Statormoduls 10 und der Statoreinheit 100 ausgerichtet. Damit liegt die Kontaktstruktur 102 auf in der ersten und zweiten Richtung 12, 14 im Inneren der Statoreinheit 100 und des Statormoduls 10 liegenden Grenzen der Statorsektoren 110, 112, 113, 114. Insbesondere bilden die auf der ersten Mittellinie und auf der zweiten Mittellinie angeordneten Anschlusspunkte 154, 155, 156 der ersten und zweiten Statorsegmente 120, 121 die Kontaktstruktur 102 zur Kontaktierung der Statorsegmente 120, 121.

Die Statoreinheit 100 kann als eine mehrlagige Einheit ausgebildet sein, wobei die Statorlagen 104, 106, 108 mit den Leiterstreifen 125 jeweils über isolierende Zwischenschichten miteinander verbunden sind. Beispielsweise kann die Statoreinheit 100 als eine gedruckte Schaltung bzw. Leiterplatte, auch *printed circuit board* (PCB) genannt, ausgeführt sein. Insbesondere kann die Statoreinheit 100 als eine mehrlagige Leiterplatte ausgebildet sein, wobei die Statorlagen 104, 106, 108 jeweils in unterschiedlichen Lagen der Leiterplatte angeordnet sind. Die Leiterstreifen 125 können auf den Lagen der Leiterplatte eine Dicke zwischen 10µm und 500µm aufweisen, insbesondere können die Leiterstreifen 125 eine Dicke zwischen 50pm und 250µm aufweisen.

Um eine Verschaltung der Hin- und Rückleiter 131, 141, 146, 132, 142, 147 der Dreiphasensysteme 150, 151 der Statorsegmente 120, 121 gemäß der in den Figuren 13, 14 und 15 dargestellten Ersatzschaltpläne zu erreichen, kann die Statoreinheit 100 im Bereich der Statorsegmente 120, 121 jeweils Verbindungsstrukturen aufweisen. Die Verbindungsstrukturen können auf den Leiterstreifen 125 oder zwischen den Leiterstreifen 125 der Statorsegmente 120, 121 angeordnet sein.

Ein Teil der Verbindungstrukturen kann als Horizontalverbindungsstrukturen ausgebildet sein, welche Leitertreifen 125, die in den einzelnen Statorsegmenten 120, 121 innerhalb derselben Statorlage 104, 106, 108 angeordnet sind, miteinander verbinden. Die Horizontalverbindungsstrukturen sind auf derselben Statorlage 104, 106, 108 angeordnet, wie die zu verbindenden Leiterstreifen 125. Die Horizontalverbindungsstrukturen können in den Statorlagen 104, 106, 108 jeweils in derjenigen Richtung 12, 14 verlaufen, in der die Leiterstreifen 125 nebeneinander angeordnet sind. Bei den ersten Statorsegmenten 120, bei denen die Leiterstreifen 125 entlang der zweiten Richtung 14 ausgedehnt und entlang der ersten Richtung 12 nebeneinander angeordnet sind, können die Horizontalverbindungsstrukturen entlang der ersten Richtung 12 verlaufen. In den Statorlagen 104, 106, 108, in denen die zweiten Statorsegmente 121 angeordnet sind, können die Horizontalverbindungsstrukturen entlang der zweiten Richtung 14 verlaufen. Die Horizontalverbindungsstrukturen können, wie die Leiterstreifen 125, als Leiterbahnen oder Leiterbahnabschnitte einer Lage einer Leiterplatte der Statoreinheit 100 ausgebildet sein.

Ein Teil der Verbindungstrukturen kann als Vertikalverbindungsstrukturen ausgebildet sein, welche Leitertreifen 125, die in den einzelnen Statorsegmenten 120, 121 in verschiedenen Statorlagen 104, 106, 108 angeordnet sind, miteinander verbinden. Über die Vertikalverbindungsstrukturen können beispielsweise die ersten Hin- und Rückleiter 131, 132 für die ersten Phasen U der Antriebsströme in Reihe geschaltet sein. Ebenso können die zweiten Hin- und Rückleiter 141, 142 für die zweiten Phasen V der Antriebsströme und die dritten Hin- und Rückleiter 146, 147 für die dritten Phasen W der Antriebsströme über die Vertikalverbindungsstrukturen in Reihe geschaltet sein. Die Vertikalverbindungsstrukturen können als Durchkontaktierungen oder als Vias (*vertical interconnect access*) zwischen den einzelnen Statorlagen 104, 106, 108 der Leiterplatte der Statoreinheit 100 ausgebildet sein.

Die schematischen Darstellungen der vorangegangenen Figuren zeigen die Leiterstreifen 125 jeweils als rechteckig ausgebildete und sich über die gesamte Segmentlänge 123 erstreckende Leiterstrukturen. Die Leiterstreifen 125 können in von den Verbindungsstrukturen entfernten Bereichen der Statoreinheit 100 ausgebildet sein, wie es in den vorangegangenen Figuren schematisch dargestellt ist. Insbesondere im Bereich der Verbindungsstrukturen kann die Form der Leiterstreifen 125 jedoch auch von den schematischen Darstellungen der vorangegangenen Figuren abweichen. Insbesondere können die Leiterstreifen 125 der ersten Statorsegmente 120 im Bereich der Verbindungsstrukturen in der ersten Richtung 12 schmaler ausgebildet sein als in den von den Verbindungsstrukturen entfernten Bereichen. Ebenso können die Leiterstreifen 125 der zweiten Statorsegmente 121 im Bereich der Verbindungsstrukturen in der zweiten Richtung 14 schmaler ausgebildet sein als in den von den Verbindungsstrukturen entfernten Bereichen.

Die Leiterstreifen 125 der ersten Statorsegmente 120 können in der zweiten Richtung 14 auch kürzer ausgebildet sein, als es in den vorangegangenen Figuren schematisch dargestellt ist. Die Leiterstreifen 125 der zweiten Statorsegmente 121 können in der ersten Richtung 12 auch kürzer ausgebildet sein, als es in den vorangegangenen Figuren schematisch dargestellt ist. Insbesondere müssen sich die Leiterstreifen 125 der einzelnen ersten Statorsegmente 120 in der zweiten Richtung 14 nicht jeweils vollständig über die ersten Statorsegmente 120 erstrecken und die Leiterstreifen 125 der einzelnen zweiten Statorsegmente 121 müssen sich in der zweiten Richtung 14 nicht jeweils vollständig über die zweiten Statorsegmente 121 erstrecken. Stattdessen können im Bereich der Außenkanten 161, 162, 171, 172, 181, 182, 191, 192 und der Innenkanten 163, 164, 173, 174, 183, 184, 193, 194 der Statorsektoren 110, 112, 113, 114 Horizontalverbindungsstrukturen und/oder Vertikalverbindungsstrukturen angeordnet sein.

Die Statorsektoren 110, 112, 113, 114 sind jeweils quadratisch ausgebildet und umfassen in jeder Statorlage 104, 106, 108 entweder in der ersten Richtung 12 jeweils drei erste Statorsegmente 120 oder in der zweiten Richtung 14 jeweils drei zweite Statorsegmente 121. Bei alternativen Ausführungsformen des Statormoduls 10 können die Statorsektoren 110, 112, 113, 114 auch jeweils rechteckig ausgebildet sein und in der ersten und/oder der zweiten Richtung 12, 14 mehr als drei erste bzw. zweite Statorsegmente 120, 121 umfassen.

Beispielsweise können die Statorsektoren 110, 112, 113, 114 in der ersten Richtung 12 eine größere Ausdehnung aufweisen als in der zweiten Richtung 14. In solch einem Fall können in den Statorlagen 104, 108, in denen die ersten Statorsegmente 120 angeordnet sind, jeweils mehr als drei erste Statorsegmente 120 in der ersten Richtung 12 nebeneinander angeordnet sein. Die in den anderen Statorlagen 106, 108 angeordneten zweiten Statorsegmente 121 können sich dann in der ersten Richtung 12 über alle nebeneinander angeordneten ersten Statorsegmente 120 der einzelnen Statorlagen 104, 108 erstrecken. Insbesondere können die zweiten Statorsegmente 121 in der ersten Richtung 12 eine Segmentlänge aufweisen, die der Ausdehnung aller nebeneinander angeordneten ersten Statorsegmente 120 der einzelnen Statorlagen 104, 108 eines Statorsektors entspricht.

Die Statorsektoren 110, 112, 113, 114 können auch in der zweiten Richtung 14 eine größere Ausdehnung aufweisen als in der ersten Richtung 12. In solch einem Fall können in den Statorlagen 106, 108, in denen die zweiten Statorsegmente 121 angeordnet sind, jeweils mehr als drei zweite Statorsegmente 121 in der zweiten Richtung 14 nebeneinander angeordnet sein. Die in den anderen Statorlagen 104, 108 angeordneten ersten Statorsegmente 120 können sich dann in der zweiten Richtung 14 über alle nebeneinander angeordneten zweiten Statorsegmente 121 der einzelnen Statorlagen 106, 108 erstrecken. Insbesondere können die ersten Statorsegmente 120 in der zweiten Richtung 14 eine Segmentlänge aufweisen, die der Ausdehnung aller nebeneinander angeordneten zweiten Statorsegmente 121 der einzelnen Statorlagen 104, 108 eines Statorsektors entspricht.

Die Magneteinheiten 210, 220, 230, 240 umfassen jeweils fünf Magneten 211, 212, 213, 214, 215 und weisen jeweils eine Breite 250 auf, die der Magnetisierungsperiode 219 der Magneteinheiten 210, 220, 230, 240 entspricht. Alternative Ausführungsformen der Magneteinheiten 210, 220, 230, 240 können auch eine Breite aufweisen, die einem ganz- oder halbzahligen Vielfachen der Magnetisierungsperiode 219 entspricht. Magnetanordnungen mit derartigen Magneteinheiten werden unter anderem in den eingangs durch Bezugnahme aufgenommenen Veröffentlichungen beschrieben.

### Bezugszeichenliste

- 1: Planarantriebssystem
- 3: weiteres Planarantriebssystem
- 10: Statormodul
- 11: Statorfläche
- 12: erste Richtung
- 14: zweite Richtung
- 15: dritte Richtung
- 16: Anschlussleitung
- 18: Modulgehäuse
- 21: erste Außenkante
- 22: zweite Außenkante
- 23: dritte Außenkante
- 24: vierte Außenkante
- 32: Unterseite
- 33: Seitenflächen
- 100: Statoreinheit
- 102: Kontaktstruktur
- 104: erste Statorlage
- 106: zweite Statorlage
- 108: weitere Statorlagen
- 110: erster Statorsektor
- 112: zweiter Statorsektor
- 113: dritter Statorsektor
- 114: vierter Statorsektor
- 115: Sektorbreite
- 116: Sektorlänge
- 120: erste Statorsegmente
- 121: zweite Statorsegmente
- 122: Segmentbreite
- 123: Segmentlänge
- 125: Leiterstreifen
- 131: erster Hinleiter
- 132: erster Rückleiter
- 134: Leiterperiode
- 136: Leiterlänge
- 138: Leiterperiode
- 141: zweiter Hinleiter
- 142: zweiter Rückleiter
- 146: dritter Hinleiter
- 147: dritter Rückleiter
- 150: erste Dreiphasensysteme
- 151: zweite Dreiphasensysteme
- 152: erste Seite
- 153: erste Seite
- 154: erster Anschlusspunkt
- 155: zweiter Anschlusspunkt
- 156: dritter Anschlusspunkt
- 157: Sternpunkt
- 161: erste Außenkante
- 162: zweite Außenkante
- 163: erste Innenkante
- 164: zweite Innenkante
- 171: erste Außenkante
- 172: zweite Außenkante
- 173: erste Innenkante
- 174: zweite Innenkante
- 181: erste Außenkante
- 182: zweite Außenkante
- 183: erste Innenkante
- 184: zweite Innenkante
- 191: erste Außenkante
- 192: zweite Außenkante
- 193: erste Innenkante
- 194: zweite Innenkante
- 200: Läufer
- 201: Magnetanordnung
- 202: Breite Magnetanordnung
- 203: Länge Magnetanordnung
- 204: Abstandshalter
- 205: Befestigungsstruktur
- 206: erste Läuferrichtung
- 208: zweite Läuferrichtung
- 209: Freifläche
- 210: erste Magneteinheit
- 211: erster Antriebsmagnet
- 212: zweiter Antriebsmagnet
- 213: dritter Antriebsmagnet
- 214: erster Kompensationsmagnet
- 215: zweiter Kompensationsmagnet
- 216: Magnetbreite
- 217: Magnetbreite
- 218: Magnetlänge
- 219: Magnetisierungsperiode
- 220: zweite Magneteinheit
- 230: dritte Magneteinheit
- 240: vierte Magneteinheit
- 250: Breite Magneteinheit
- 251: Breitenrichtung
- 252: Länge Magneteinheit
- 253: Längenrichtung
- 254: Zwischenraum
- 256: Breite Zwischenraum
- 260: äußere Längskante
- 261: äußere Querkante
- 262: innere Längskante
- 263: innere Querkante
- 302: weitere Magneteinheit
- 304: erster Antriebsmagnet
- 306: zweiter Antriebsmagnet
- 308: erster Kompensationsmagnet
- 310: zweiter Kompensationsmagnet
- 312: dritter Kompensationsmagnet

## Patentansprüche

1. Planarantriebssystem (1) mit einem Statormodul (10) und einem Läufer (200),
wobei der Läufer (200) eine Magnetanordnung (201) aufweist,
wobei die Magnetanordnung (201) zumindest eine erste Magneteinheit (210) und zumindest eine zweite Magneteinheit (220) aufweist,
wobei die erste Magneteinheit (210) in einer ersten Läuferrichtung (206) nebeneinander angeordnete und entlang einer zu der ersten Läuferrichtung (206) senkrecht orientierten zweiten Läuferrichtung (208) ausgedehnte längliche Antriebsmagnete (211, 212, 213, 304, 306) aufweist,
wobei die zweite Magneteinheit (220) in der zweiten Läuferrichtung (208) nebeneinander angeordnete und entlang der ersten Läuferrichtung (206) ausgedehnte längliche Antriebsmagnete (211, 212, 213, 304, 306) aufweist,
wobei das Statormodul (10) eine Statoreinheit (100) mit mindestens einem Statorsektor (110, 112, 113, 114) aufweist, der in einer ersten Statorlage (104) erste Statorsegmente (120) zur Wechselwirkung mit den Antriebsmagneten (211, 212, 213, 304, 306) der ersten Magneteinheit (210) und in einer unter der ersten Statorlage (104) angeordneten zweiten Statorlage (106) zweite Statorsegmente (121) zur Wechselwirkung mit den Antriebsmagneten (211, 212, 213, 304, 306) der zweiten Magneteinheit (220) umfasst,
wobei die ersten Statorsegmente (120) entlang einer ersten Richtung (12) nebeneinander angeordnete und entlang einer zu der ersten Richtung (12) senkrecht orientierten zweiten Richtung (14) ausgedehnte längliche Leiterstreifen (125) aufweisen,
wobei die zweiten Statorsegmente (121) entlang der zweiten Richtung (14) nebeneinander angeordnete und entlang der ersten Richtung (12) ausgedehnte längliche Leiterstreifen (125) aufweisen,
wobei die Leiterstreifen (125) der einzelnen Statorsegmente (120, 121) jeweils unabhängig von den Leiterstreifen (125) der übrigen Statorsegmente (120, 121) bestrombar sind,
wobei sich die ersten Statorsegmente (120) des Statorsektors (110, 112, 113, 114) in der zweiten Richtung (14) über alle nebeneinander angeordneten zweiten Statorsegmente (121) des Statorsektors (110, 112, 113, 114) erstrecken,
wobei sich die zweiten Statorsegmente (121) des Statorsektors (110, 112, 113, 114) in der ersten Richtung (12) über alle nebeneinander angeordneten ersten Statorsegmente (120) des Statorsektors (110, 112, 113, 114) erstrecken,
**dadurch gekennzeichnet, dass** die Sektorbreite (115) des Statorsektors (110, 112, 113, 114) in der ersten Richtung (12) kleiner ist als die Ausdehnung (202) der Magnetanordnung (201) in der ersten Läuferrichtung (206), und dass die Sektorlänge (116) des Statorsektors (110, 112, 113, 114) in der zweiten Richtung (14) kleiner ist als die Ausdehnung (203) der Magnetanordnung (201) in der zweiten Läuferrichtung (208) wobei der Statorsektor (110, 112, 113, 114) in der ersten Statorlage (104) aus drei unabhängig voneinander bestrombaren ersten Statorsegmenten (120) und in der zweiten Statorlage (106) aus drei unabhängig voneinander bestrombaren zweiten Statorsegmenten (121) besteht, und
wobei die Magnetisierungsanordnung (201) des Läufers jeweils eine Breite von drei Magnetisierungsperioden (219) in der ersten Läuferrichtung (206) und der zweiten Läuferrichtung (208) aufweist.

2. Planarantriebssystem (1) nach Anspruch 1,
wobei die Segmentbreite (122) der ersten Statorsegmente (120) in der ersten Richtung (12) der Magnetisierungsperiode (219) der ersten Magneteinheit (210) entspricht,
wobei die Segmentbreite (122) der zweiten Statorsegmente (121) in der zweiten Richtung (14) der Magnetisierungsperiode (219) der zweiten Magneteinheit (220) entspricht.

3. Planarantriebssystem (1) nach einem der vorhergehenden Ansprüche,
wobei die Segmentbreite (122) der ersten Statorsegmente (120) in der zweiten Richtung (14) dem Dreifachen der Magnetisierungsperiode (219) der ersten Magneteinheit (210) entspricht,
wobei die Segmentbreite (122) der zweiten Statorsegmente (121) in der ersten Richtung (12) dem Dreifachen der Magnetisierungsperiode (219) der zweiten Magneteinheit (220) entspricht.

4. Planarantriebssystem (1) nach einem der vorhergehenden Ansprüche,
wobei die Leiterperiode (134) der Leiterstreifen (125) der ersten Statorsegmente (120) einem Sechstel der Magnetisierungsperiode (219) der ersten Magneteinheit (210) entspricht,
wobei die Leiterperiode (134) der Leiterstreifen (125) der zweiten Statorsegmente (120) einem Sechstel der Magnetisierungsperiode (219) der zweiten Magneteinheit (220) entspricht.

5. Planarantriebssystem (1) nach einem der vorhergehenden Ansprüche,
wobei die Ausdehnung (250) der ersten Magneteinheit (210) in der ersten Läuferrichtung (206) der Magnetisierungsperiode (219) der ersten Magneteinheit (210) und die Ausdehnung (250) der zweiten Magneteinheit (220) in der zweiten Läuferrichtung (208) der Magnetisierungsperiode (219) der zweiten Magneteinheit (220) entspricht.

6. Planarantriebssystem (1) nach einem der vorhergehenden Ansprüche,
wobei der Statorsektor (110, 112, 113, 114) quadratisch ausgebildet ist, so dass die Sektorbreite (115) des Statorsektors (110, 112, 113, 114) in der ersten Richtung (12) der Sektorlänge (116) des Statorsektors (110, 112, 113, 114) in der zweiten Richtung (14) entspricht.

7. Planarantriebssystem (1) nach einem der vorhergehenden Ansprüche,
wobei eine Außenkante (161, 162, 171, 172, 181, 182, 191, 192) des Statorsektors (110, 112, 113, 114) mit einer Außenkante (21, 22, 23, 24) des Statormoduls (10) abschließt, so dass der Statorsektor (110, 112, 113, 114) und ein mit einer Außenkante (21, 22, 23, 24) eines neben dem Statormodul (10) angeordneten weiteren Statormoduls (10) abschließender Statorsektor (110, 112, 113, 114) des weiteren Statormoduls (10) aneinander anschließend angeordnet werden können.

8. Planarantriebssystem (1) nach einem der vorhergehenden Ansprüche,
wobei die Statoreinheit (100) drei weitere Statorsektoren (110, 112, 113, 114) umfasst,
wobei in der ersten Richtung (12) und in der zweiten Richtung (14) der Statorsektor und die weiteren Statorsektoren (110, 112, 113, 114) der Statoreinheit (100) in jeweils zwei Reihen nebeneinander und aneinander anschließend angeordnet sind,
wobei die weiteren Statorsektoren (110, 112, 113, 114) in der ersten und zweiten Statorlage (104, 106) jeweils weitere der ersten bzw. zweiten Statorsegmente (120, 121) aufweisen.

9. Planarantriebssystem (1) nach einem der vorhergehenden Ansprüche,
wobei die ersten Statorsegmente (120) jeweils sechs nebeneinander angeordnete Leiterstreifen (125) umfassen,
wobei die zweiten Statorsegmente (121) jeweils sechs nebeneinander angeordnete Leiterstreifen (125) umfassen.

10. Planarantriebssystem (1) nach einem der vorhergehenden Ansprüche,
wobei die Leiterstreifen (125) der ersten Statorsegmente (120) jeweils zu Dreiphasensystemen mit je einem gemeinsamen Sternpunkt je erstem Statorsegment (120) zusammengeschaltet sind,
wobei die Leiterstreifen (125) der zweiten Statorsegmente (121) jeweils zu Dreiphasensystemen mit je einem gemeinsamen Sternpunkt je zweitem Statorsegment (121) zusammengeschaltet sind,
wobei die Dreiphasensysteme der einzelnen ersten und zweiten Statorsegmente (120, 121) unabhängig voneinander bestrombar sind.

11. Planarantriebssystem (1) nach einem der vorhergehenden Ansprüche
wobei die Statoreinheit (100) vier Statorsektor umfasst, die sich aus einem ersten Statorsektor (110), einem zweiten Statorsektor (112), einem dritten Statorsektor (113) und einem vierten Statorsektor (114) zusammensetzen,
wobei eine Außenkante (161) des ersten Statorsektors (110) und eine Außenkante (171) des zweiten Statorsektors (112) abschließend mit einer ersten Außenkante (21) des Statormoduls (10) angeordnet sind,
wobei eine weitere Außenkante (162) des ersten Statorsektors (110) und eine Außenkante (182) des dritten Statorsektors (113)abschließend mit einer zweiten Außenkante (22) des Statormoduls (10) angeordnet sind,
wobei eine weitere Außenkante (181) des dritten Statorsektors (113) und eine Außenkante (191) des vierten Statorsektors (114) abschließend mit einer dritten Außenkante (23) des Statormoduls (10) angeordnet sind, wobei eine weitere Außenkante (172) des zweiten Statorsektors (112) und eine weitere Außenkante (192) des vierten Statorsektors (114) abschließend mit einer vierten Außenkante (24) des Statormoduls (10) angeordnet sind.

## Claims

1. Planar drive system (1) having a stator module (10) and a rotor (200),
wherein the rotor (200) has a magnet arrangement (201),
wherein the magnet arrangement (201) has at least one first magnet unit (210) and at least one second magnet unit (220),
wherein the first magnet unit (210) has elongate drive magnets (211, 212, 213, 304, 306) that are arranged next to one another in a first rotor direction (206) and extend along a second rotor direction (208) which is oriented perpendicular to the first rotor direction (206),
wherein the second magnet unit (220) has elongate drive magnets (211, 212, 213, 304, 306) that are arranged next to one another in the second rotor direction (208) and extend along the first rotor direction (206),
wherein the stator module (10) has a stator unit (100) with at least one stator sector (110, 112, 113, 114) which comprises, in a first stator layer (104), first stator segments (120) for interacting with the drive magnets (211, 212, 213, 304, 306) of the first magnet unit (210) and, in a second stator layer (106) arranged beneath the first stator layer (104), second stator segments (121) for interacting with the drive magnets (211, 212, 213, 304, 306) of the second magnet unit (220),
wherein the first stator segments (120) have elongate conductor strips (125) that are arranged next to one another along a first direction (12) and extend along a second direction (14) which is oriented perpendicular to the first direction (12),
wherein the second stator segments (121) have elongate conductor strips (125) that are arranged next to one another along the second direction (14) and extend along the first direction (12),
wherein the conductor strips (125) of the individual stator segments (120, 121) can be energized in each case independently of the conductor strips (125) of the other stator segments (120, 121),
wherein the first stator segments (120) of the stator sector (110, 112, 113, 114) extend in the second direction (14) over all of the second stator segments (121), arranged next to one another, of the stator sector (110, 112, 113, 114),
wherein the second stator segments (121) of the stator sector (110, 112, 113, 114) extend in the first direction (12) over all of the first stator segments (120), arranged next to one another, of the stator sector (110, 112, 113, 114),
**characterized in that**
a sector breadth (115) of the stator sector (110, 112, 113, 114) in the first direction (12) is smaller than an extent (202) of the magnet arrangement (201) in the first rotor direction (206), and **in that** a sector length (116) of the stator sector (110, 112, 113, 114) in the second direction (14) is smaller than an extent (203) of the magnet arrangement (201) in the second rotor direction (208),
wherein the stator sector (110, 112, 113, 114) consists in the first stator layer (104) of three mutually independently energizable first stator segments (120) and in the second stator layer (106) of three mutually independently energizable second stator segments (121), and
wherein the magnetising arrangement (201) of the rotor respectively has a breadth of three magnetization periods (219) in the first rotor direction (206) and the second rotor direction (208).

2. Planar drive system (1) according to claim 1,
wherein a segment breadth (122) of the first stator segments (120) in the first direction (12) corresponds to a magnetization period (219) of the first magnet unit (210),
wherein a segment breadth (122) of the second stator segments (121) in the second direction (14) corresponds to a magnetization period (219) of the second magnet unit (220).

3. Planar drive system (1) according to one of the preceding claims,
wherein the segment breadth (122) of the first stator segments (120) in the second direction (14) corresponds to three times the magnetization period (219) of the first magnet unit (210),
wherein the segment breadth (122) of the second stator segments (121) in the first direction (12) corresponds to three times the magnetization period (219) of the second magnet unit (220).

4. Planar drive system (1) according to one of the preceding claims,
wherein a conductor period (134) of the conductor strips (125) of the first stator segments (120) corresponds to one sixth of a magnetization period (219) of the first magnet unit (210),
wherein a conductor period (134) of the conductor strips (125) of the second stator segments (120) corresponds to one sixth of a magnetization period (219) of the second magnet unit (220).

5. Planar drive system (1) according to one of the preceding claims,
wherein an extent (250) of the first magnet unit (210) in the first rotor direction (206) corresponds to a magnetization period (219) of the first magnet unit (210) and an extent (250) of the second magnet unit (220) in the second rotor direction (208) corresponds to a magnetization period (219) of the second magnet unit (220).

6. Planar drive system (1) according to one of the preceding claims,
wherein the stator sector (110, 112, 113, 114) is square, so that the sector breadth (115) of the stator sector (110, 112, 113, 114) in the first direction (12) corresponds to the sector length (116) of the stator sector (110, 112, 113, 114) in the second direction (14).

7. Planar drive system (1) according to one of the preceding claims,
wherein an outer edge (161, 162, 171, 172, 181, 182, 191, 192) of the stator sector (110, 112, 113, 114) is flush with an outer edge (21, 22, 23, 24) of the stator module (10), so that the stator sector (110, 112, 113, 114) and a stator sector (110, 112, 113, 114), being flush with an outer edge (21, 22, 23, 24) of a further stator module (10) arranged next to the stator module (10), of the further stator module (10) can be arranged so as to adjoin one another.

8. Planar drive system (1) according to one of the preceding claims,
wherein the stator unit (100) comprises three further stator sectors (110, 112, 113, 114),
wherein in the first direction (12) and in the second direction (14) the stator sector and the further stator sectors (110, 112, 113, 114) of the stator unit (100) are in each case arranged in two rows next to one another and adjoining one another,
wherein the further stator sectors (110, 112, 113, 114), in the first and second stator layer (104, 106), have in each case further ones of the first or, respectively, second stator segments (120, 121).

9. Planar drive system (1) according to one of the preceding claims,
wherein the first stator segments (120) in each case comprise six conductor strips (125) arranged next to one another,
wherein the second stator segments (121) in each case comprise six conductor strips (125) arranged next to one another.

10. Planar drive system (1) according to one of the preceding claims,
wherein the conductor strips (125) of the first stator segments (120) are in each case connected together to form three-phase systems with in each case a common star point for each first stator segment (120),
wherein the conductor strips (125) of the second stator segments (121) are in each case connected together to form three-phase systems with in each case a common star point for each second stator segment (121),
wherein the three-phase systems of the individual first and second stator segments (120, 121) can be energized independently of one another.

11. Planar drive system (1) according to one of the preceding claims,
wherein the stator unit (100) comprises four stator sectors which consist of a first stator sector (110), a second stator sector (112), a third stator sector (113) and a fourth stator sector (114),
wherein an outer edge (161) of the first stator sector (110) and an outer edge (171) of the second stator sector (112) are arranged so as to be flush with a first outer edge (21) of the stator module (10), wherein a further outer edge (162) of the first stator sector (110) and an outer edge (182) of the third stator sector (113) are arranged so as to be flush with a second outer edge (22) of the stator module (10),
wherein a further outer edge (181) of the third stator sector (113) and an outer edge (191) of the fourth stator sector (114) are arranged so as to be flush with a third outer edge (23) of the stator module (10),
wherein a further outer edge (172) of the second stator sector (112) and a further outer edge (192) of the fourth stator sector (114) are arranged so as to be flush with a fourth outer edge (24) of the stator module (10).

## Revendications

1. Système d'entraînement planaire (1), comprenant un module de stator (10) et un rotor (200),
le rotor (200) présentant un agencement d'aimants (201),
l'agencement d'aimants (201) présentant au moins une première unité d'aimants (210) et au moins une deuxième unité d'aimants (220),
la première unité d'aimants (210) présentant des aimants d'entraînement allongés (211, 212, 213, 304, 306), disposés côte à côte dans une première direction de rotor (206) et étendus le long d'une deuxième direction de rotor (208) orientée perpendiculairement à la première direction de rotor (206),
la deuxième unité d'aimants (220) présentant des aimants d'entraînement allongés (211, 212, 213, 304, 306), disposés côte à côte dans la deuxième direction de rotor (208) et étendus le long de la première direction de rotor (206),
le module de stator (10) présentant une unité de stator (100) dotée d'au moins un secteur de stator (110, 112, 113, 114) comprenant dans une première position de stator (104) des premiers segments de stator (120) destinés à interagir avec les aimants d'entraînement (211, 212, 213, 304, 306) de la première unité d'aimants (210) et comprenant dans une deuxième position de stator (106), disposée sous la première position de stator (104), des deuxièmes segments de stator (121) destinés à interagir avec les aimants d'entraînement (211, 212, 213, 304, 306) de la deuxième unité d'aimants (220),
les premiers segments de stator (120) présentant des bandes conductrices allongées (125), disposées côte à côte le long d'une première direction (12) et étendues le long d'une deuxième direction (14) orientée perpendiculairement à la première direction (12),
les deuxièmes segments de stator (121) présentant des bandes conductrices allongées (125), disposées côte à côte le long de la deuxième direction (14) et étendues le long de la première direction (12),
les bandes conductrices (125) des segments de stator individuels (120, 121) pouvant respectivement être alimentées en courant indépendamment des bandes conductrices (125) des autres segments de stator (120, 121),
les premiers segments de stator (120) du secteur de stator (110, 112, 113, 114) s'étendant dans la deuxième direction (14) sur tous les deuxièmes segments de stator (121), disposés côte à côte, du secteur de stator (110, 112, 113, 114),
les deuxièmes segments de stator (121) du secteur de stator (110, 112, 113, 114) s'étendant dans la première direction (12) sur tous les premiers segments de stator (120), disposés côte à côte, du secteur de stator (110, 112, 113, 114),
**caractérisé**
**en ce qu'**une largeur de secteur (115) du secteur de stator (110, 112, 113, 114) est plus petite dans la première direction (12) qu'une extension (202) de l'agencement d'aimants (201) dans la première direction de rotor (206), et
**en ce qu'**une longueur de secteur (116) du secteur de stator (110, 112, 113, 114) est plus petite dans la deuxième direction (14) qu'une extension (203) de l'agencement d'aimants (201) dans la deuxième direction de rotor (208),
le secteur de stator (110, 112, 113, 114) étant composé dans la première position de stator (104) de trois premiers segments de stator (120) pouvant être alimentés en courant indépendamment les uns des autres, et étant composé dans la deuxième position de stator (106) de trois deuxièmes segments de stator (121) pouvant être alimentés en courant indépendamment les uns des autres, et
l'agencement d'aimantation (201) du rotor présentant respectivement une largeur de trois périodes d'aimantation (219) dans la première direction de rotor (206) et dans la deuxième direction de rotor (208).

2. Système d'entraînement planaire (1) selon la revendication 1,
une largeur de segment (122) des premiers segments de stator (120) dans la première direction (12) correspondant à une période d'aimantation (219) de la première unité d'aimants (210),
une largeur de segment (122) des deuxièmes segments de stator (121) dans la deuxième direction (14) correspondant à une période d'aimantation (219) de la deuxième unité d'aimants (220).

3. Système d'entraînement planaire (1) selon l'une quelconque des revendications précédentes,
la largeur de segment (122) des premiers segments de stator (120) dans la deuxième direction (14) correspondant au triple de la période d'aimantation (219) de la première unité d'aimants (210),
la largeur de segment (122) des deuxièmes segments de stator (121) dans la première direction (12) correspondant au triple de la période d'aimantation (219) de la deuxième unité d'aimants (220).

4. Système d'entraînement planaire (1) selon l'une quelconque des revendications précédentes,
une période de conducteur (134) des bandes conductrices (125) des premiers segments de stator (120) correspondant à un sixième d'une période d'aimantation (219) de la première unité d'aimants (210),
une période de conducteur (134) des bandes conductrices (125) des deuxièmes segments de stator (120) correspondant à un sixième d'une période d'aimantation (219) de la deuxième unité d'aimants (220) .

5. Système d'entraînement planaire (1) selon l'une quelconque des revendications précédentes,
une extension (250) de la première unité d'aimants (210) dans la première direction de rotor (206) correspondant à une période d'aimantation (219) de la première unité d'aimants (210), et une extension (250) de la deuxième unité d'aimants (220) dans la deuxième direction de rotor (208) correspondant à une période d'aimantation (219) de la deuxième unité d'aimants (220) .

6. Système d'entraînement planaire (1) selon l'une quelconque des revendications précédentes,
le secteur de stator (110, 112, 113, 114) étant réalisé de manière carrée de sorte que la largeur de secteur (115) du secteur de stator (110, 112, 113, 114) dans la première direction (12) correspond à la longueur de secteur (116) du secteur de stator (110, 112, 113, 114) dans la deuxième direction (14).

7. Système d'entraînement planaire (1) selon l'une quelconque des revendications précédentes,
un bord extérieur (161, 162, 171, 172, 181, 182, 191, 192) du secteur de stator (110, 112, 113, 114) étant aligné sur un bord extérieur (21, 22, 23, 24) du module de stator (10) de sorte que le secteur de stator (110, 112, 113, 114) et un secteur de stator (110, 112, 113, 114), aligné sur un bord extérieur (21, 22, 23, 24) d'un autre module de stator (10) disposé à côté du module de stator (10), de l'autre module de stator (10) peuvent être disposés de manière adjacente l'un à l'autre.

8. Système d'entraînement planaire (1) selon l'une quelconque des revendications précédentes,
l'unité de stator (100) comprenant trois autres secteurs de stator (110, 112, 113, 114),
dans lequel, dans la première direction (12) et dans la deuxième direction (14), le secteur de stator et les autres secteurs de stator (110, 112, 113, 114) de l'unité de stator (100) sont disposés sur respectivement deux rangées côte à côte et de manière adjacente les uns aux autres,
les autres secteurs de stator (110, 112, 113, 114) présentant dans la première et la deuxième position de stator (104, 106) respectivement d'autres segments des premiers ou deuxièmes segments de stator (120, 121).

9. Système d'entraînement planaire (1) selon l'une quelconque des revendications précédentes,
les premiers segments de stator (120) comprenant respectivement six bandes conductrices (125) disposées côte à côte,
les deuxièmes segments de stator (121) comprenant respectivement six bandes conductrices (125) disposées côte à côte.

10. Système d'entraînement planaire (1) selon l'une quelconque des revendications précédentes,
les bandes conductrices (125) des premiers segments de stator (120) étant respectivement interconnectées en systèmes triphasés avec respectivement un point neutre commun pour chaque segment de stator (120),
les bandes conductrices (125) des deuxièmes segments de stator (121) étant respectivement interconnectées en systèmes triphasés avec respectivement un point neutre commun pour un segment de stator (121) sur deux,
les systèmes triphasés des premiers et deuxièmes segments de stator (120, 121) individuels pouvant être alimentés en courant indépendamment les uns des autres.

11. Système d'entraînement planaire (1) selon l'une quelconque des revendications précédentes,
l'unité de stator (100) comprenant quatre secteurs de stator qui se composent d'un premier secteur de stator (110), d'un deuxième secteur de stator (112), d'un troisième secteur de stator (113) et d'un quatrième secteur de stator (114),
un bord extérieur (161) du premier secteur de stator (110) et un bord extérieur (171) du deuxième secteur de stator (112) étant disposés en alignement sur un premier bord extérieur (21) du module de stator (10),
un autre bord extérieur (162) du premier secteur de stator (110) et un bord extérieur (182) du troisième secteur de stator (113) étant disposés en alignement sur un deuxième bord extérieur (22) du module de stator (10),
un autre bord extérieur (181) du troisième secteur de stator (113) et un bord extérieur (191) du quatrième secteur de stator (114) étant disposés en alignement sur un troisième bord extérieur (23) du module de stator (10),
un autre bord extérieur (172) du deuxième secteur de stator (112) et un autre bord extérieur (192) du quatrième secteur de stator (114) étant disposés en alignement sur un quatrième bord extérieur (24) du module de stator (10).
